# EUROPEAN PATENT APPLICATION

(11) **EP 4 596 272 A1**
(43) Date of publication of application: **06.08.2025**
(21) Application number: 23869841.9
(22) Date of filing: 30.06.2023
(51) Int. Cl.: B60H 1/00

(54) **THERMAL MANAGEMENT SYSTEM AND VEHICLE HAVING SAME**

(30) Priority: 29.09.2022 CN 202211204946
(71) Applicant: BYD Company Limited, Shenzhen, Guangdong 518118 (CN)
(72) Inventor: WU, Chunfen, Shenzhen, Guangdong 518118 (CN); ZHANG, Jingke, Shenzhen, Guangdong 518118 (CN); GAO, Shanling, Shenzhen, Guangdong 518118 (CN); DING, Yinhui, Shenzhen, Guangdong 518118 (CN); HUANG, Jinrong, Shenzhen, Guangdong 518118 (CN)
(74) Representative: Mathys & Squire
(86) International application number: PCT/CN2023/104457
(87) International publication number: WO 2024/066593

(57) **Abstract**

A thermal management system and a vehicle having same. The thermal management system comprises a compressor, a first heat exchanger and a heat exchange assembly; an air discharge port of the compressor is connected to the heat exchange assembly; a first port of the first heat exchanger is connected to an air inlet of the compressor; a second port of the first heat exchanger is connected to the heat exchange assembly. The heat exchange assembly comprises a first heat exchange plate and a second heat exchange plate which are arranged in parallel, and the first heat exchange plate and the second heat exchange plate are separately used for adjusting the temperature of a battery module.

## Description

### CROSS-REFERENCE TO RELATED APPLICATIONS

The present disclosure is provided based on Chinese Patent Application No. 202211204946.0 filed on September 29, 2022, and claims priority to the Chinese Patent Application. The entire content of the above-referenced application is incorporated herein by reference.

### FIELD

The present disclosure relates to the technical field of vehicles, and in particular, to a thermal management system and a vehicle with the same.

### BACKGROUND

In an existing heat pump system architecture for whole vehicle thermal management, a battery module heat exchange rate is low, so that a battery module cannot quickly reach an appropriate operating temperature, and the operating stability of the battery module is low.

### SUMMARY

The present disclosure is intended to solve at least one of the technical problems existing in the related art. Therefore, an objective of the present disclosure is to propose a thermal management system, which has a high battery heat exchange rate, so that a battery module can quickly reach an appropriate operating temperature, and the operating stability of the battery module is high. The thermal management system has high operating performance.

Another objective of the present disclosure is to propose a vehicle.

A thermal management system according to an embodiment of the present disclosure includes: a compressor, a first heat exchanger and a heat exchange assembly. An exhaust port of the compressor is connected to the heat exchange assembly. A first port of the first heat exchanger is connected to an air inlet of the compressor, and a second port of the first heat exchanger is connected to the heat exchange assembly. The heat exchange assembly includes a first heat exchange plate and a second heat exchange plate that are arranged in parallel, and the first heat exchange plate and the second heat exchange plate each are configured to adjust a temperature of a battery module.

In the thermal management system according to the embodiment of the present disclosure, the first heat exchange plate and the second heat exchange plate are arranged to exchange heat with the battery module, and may be in direct contact with different end surfaces of the battery module for heat exchange, which can not only reduce the arrangement difficulty, but also improve heat exchange efficiency, allow the battery module to quickly reach an appropriate operating temperature, and improve operating stability of the battery module and operating efficiency of the thermal management system.

In some embodiments, the thermal management system further includes a second heat exchanger. A first port of the second heat exchanger is connected to the exhaust port of the compressor, and a second port of the second heat exchanger is connected to the heat exchange assembly. The heat exchange assembly is connected to the air inlet of the compressor.

In some embodiments, the exhaust port of the compressor is connected to the first port of the first heat exchanger; the exhaust port of the compressor is in selective communication with the first port of the first heat exchanger or the heat exchange assembly, and the air inlet of the compressor is in selective communication with the heat exchange assembly or the first port of the first heat exchanger.

In some embodiments, the thermal management system further includes a storage, and the storage is connected between the exhaust port of the compressor and the air inlet of the compressor.

In some embodiments, the thermal management system further includes a fourth heat exchanger, and the fourth heat exchanger is connected between the storage and the exhaust port of the compressor.

In an embodiment, a first port of the fourth heat exchanger is connected to the exhaust port of the compressor, and a second port of the fourth heat exchanger is connected to the heat exchange assembly.

In some embodiments, the thermal management system further includes a first throttling member, and the first throttling member is arranged between the storage and the air inlet of the compressor.

In some embodiments, the first heat exchange plate and the second heat exchange plate are configured to be arranged on two opposite sides of the battery module.

In some embodiments, the thermal management system further includes a second valve group. The second valve group is arranged at a first port of the heat exchange assembly, and the first port of the heat exchange assembly is connected to the exhaust port of the compressor.

In an embodiment, the second valve group includes a first throttling element and a second throttling element that are connected in parallel, and the first throttling element and the second throttling element are connected to the first heat exchange plate and the second heat exchange plate respectively.

In some embodiments, the thermal management system further includes a first valve group. The first valve group is arranged at a second port of the heat exchange assembly, and the second port of the heat exchange assembly is in communication with the second end of the second heat exchanger.

In an embodiment, the first valve group includes a first control valve and a second control valve that are connected in parallel, and the first control valve and the second control valve are connected to the first heat exchange plate and the second heat exchange plate respectively.

In some embodiments, the thermal management system further includes an in-vehicle condenser. The exhaust port of the compressor is connected to a first end of the in-vehicle condenser, and a second end of the in-vehicle condenser is connected to the second port of the first heat exchanger. The exhaust port of the compressor is in selective communication with at least one of the first end of the in-vehicle condenser and the heat exchange assembly.

In some embodiments, the thermal management system further includes a high-pressure thermal management subsystem. The high-pressure thermal management subsystem includes a third heat exchanger and a circulation loop, and the third heat exchanger has a first flow channel and a second flow channel. A first port of the first flow channel is connected to the heat exchange assembly and the second end of the in-vehicle condenser, and a second port of the first flow channel is connected to the second port of the first heat exchanger. The second flow channel is arranged on the circulation loop, and the circulation loop is configured to exchange heat with the high-pressure thermal management subsystem.

In some embodiments, the thermal management system further includes a first switch valve, and the first switch valve is arranged between the heat exchange assembly and the second port of the first heat exchanger.

In some embodiments, the thermal management system further includes a second switch valve, and the second switch valve is arranged between the heat exchange assembly and the second port of the second heat exchanger.

In some embodiments, the thermal management system further includes a third switch valve, and the third switch valve is arranged between the heat exchange assembly and the air inlet of the compressor.

A thermal management system according to an embodiment of the present disclosure includes: a compressor, a second heat exchanger and a heat exchange assembly. A first port of the second heat exchanger is connected to an exhaust port of the compressor, and a second port of the second heat exchanger is connected to the heat exchange assembly. The heat exchange assembly is in communication with an air inlet of the compressor. The heat exchange assembly includes a first heat exchange plate and a second heat exchange plate that are arranged in parallel, and the first heat exchange plate and the second heat exchange plate each being configured to adjust a temperature of a battery module of a vehicle.

A vehicle according to an embodiment of the present disclosure includes: a battery module; and a thermal management system. The thermal management system is the thermal management system according to any one of the above implementations, and a first heat exchange plate and a second heat exchange plate are configured to adjust a temperature of a battery module.

In the vehicle according to the embodiment of the present disclosure, through the arrangement of the above thermal management system, the frequency of maintaining and replacing the battery module can be reduced, charging efficiency and use convenience of the vehicle can be improved, and an appropriate layout of the vehicle can be facilitated.

In an embodiment, the first heat exchange plate and the second heat exchange plate are arranged on the battery module and exchange heat with the battery module.

Some of the additional aspects and advantages of the present disclosure are set forth in the following description, and some become apparent from the following description, or are learned by practice of the present disclosure.

### BRIEF DESCRIPTION OF THE DRAWINGS

The above and/or additional aspects and advantages of the present disclosure become apparent and readily comprehensible from the description of embodiments with reference to the following accompanying drawings, in which:
FIG. 1 is a schematic diagram of a structure of a thermal management system according to an embodiment of the present disclosure;
FIG. 2 is a schematic diagram of a structure of a high-pressure thermal management subsystem according to an embodiment of the present disclosure;
FIG. 3 is a schematic diagram of refrigerant operation in a thermal management system according to Embodiment 1 of the present disclosure;
FIG. 4 is a schematic diagram of refrigerant operation in a thermal management system according to Embodiment 2 of the present disclosure;
FIG. 5 is a schematic diagram of refrigerant operation in a thermal management system according to Embodiment 3 of the present disclosure;
FIG. 6 is a schematic diagram of refrigerant operation in a thermal management system according to Embodiment 4 of the present disclosure;
FIG. 7 is a schematic diagram of refrigerant operation in a thermal management system according to Embodiment 5 of the present disclosure;
FIG. 8 is a schematic diagram of refrigerant operation in a thermal management system according to Embodiment 6 of the present disclosure;
FIG. 9 is a schematic diagram of refrigerant operation in a thermal management system according to Embodiment 7 of the present disclosure;
FIG. 10 is a schematic diagram of refrigerant operation in a thermal management system according to Embodiment 8 of the present disclosure;
FIG. 11 is a schematic diagram of refrigerant operation in a thermal management system according to Embodiment 9 of the present disclosure;
FIG. 12 is a schematic diagram of refrigerant operation in a thermal management system according to Embodiment 10 of the present disclosure;
FIG. 13 is a schematic diagram of refrigerant operation in a thermal management system according to Embodiment 11 of the present disclosure;
FIG. 14 is a schematic diagram of refrigerant operation in a thermal management system according to Embodiment 12 of the present disclosure;
FIG. 15 is a schematic diagram of refrigerant operation in a thermal management system according to Embodiment 13 of the present disclosure;
FIG. 16 is a schematic diagram of refrigerant operation in a thermal management system according to Embodiment 14 of the present disclosure;
FIG. 17 is a schematic diagram of refrigerant operation in a thermal management system according to Embodiment 15 of the present disclosure;
FIG. 18 is a schematic diagram of refrigerant operation in a thermal management system according to Embodiment 16 of the present disclosure;
FIG. 19 is a schematic diagram of coolant operation under a first working condition of a high-pressure thermal management subsystem according to an embodiment of the present disclosure;
FIG. 20 is a schematic diagram of coolant operation under a mixing condition of a high-pressure thermal management subsystem according to an embodiment of the present disclosure;
FIG. 21 is a schematic diagram of coolant operation under a second working condition of a high-pressure thermal management subsystem according to an embodiment of the present disclosure;
FIG. 22 is a schematic diagram of coolant operation under a third working condition of a high-pressure thermal management subsystem according to an embodiment of the present disclosure;
FIG. 23 is a schematic diagram of refrigerant operation in a thermal management system and a schematic diagram of coolant operation in a high-pressure thermal management subsystem according to Embodiment 17 of the present disclosure;
FIG. 24 is a schematic diagram of refrigerant operation in a thermal management system and a schematic diagram of coolant operation in a high-pressure thermal management subsystem according to Embodiment 18 of the present disclosure;
FIG. 25 is a schematic diagram of refrigerant operation in a thermal management system and a schematic diagram of coolant operation in a high-pressure thermal management subsystem according to Embodiment 19 of the present disclosure;
FIG. 26 is a schematic diagram of refrigerant operation in a thermal management system and a schematic diagram of coolant operation in a high-pressure thermal management subsystem according to Embodiment 20 of the present disclosure;
FIG. 27 is a schematic diagram of refrigerant operation in a thermal management system and a schematic diagram of coolant operation in a high-pressure thermal management subsystem according to Embodiment 21 of the present disclosure;
FIG. 28 is a schematic diagram of refrigerant operation in a thermal management system and a schematic diagram of coolant operation in a high-pressure thermal management subsystem according to Embodiment 22 of the present disclosure;
FIG. 29 is a schematic diagram of refrigerant operation in a thermal management system and a schematic diagram of coolant operation in a high-pressure thermal management subsystem according to Embodiment 23 of the present disclosure;
FIG. 30 is a schematic diagram of refrigerant operation in a thermal management system and a schematic diagram of coolant operation in a high-pressure thermal management subsystem according to Embodiment 24 of the present disclosure;
FIG. 31 is a schematic diagram of refrigerant operation in a thermal management system and a schematic diagram of coolant operation in a high-pressure thermal management subsystem according to Embodiment 25 of the present disclosure;
FIG. 32 is a schematic diagram of refrigerant operation in a thermal management system and a schematic diagram of coolant operation in a high-pressure thermal management subsystem according to Embodiment 26 of the present disclosure;
FIG. 33 is a schematic diagram of refrigerant operation in a thermal management system and a schematic diagram of coolant operation in a high-pressure thermal management subsystem according to Embodiment 27 of the present disclosure;
FIG. 34 is a schematic diagram of refrigerant operation in a thermal management system and a schematic diagram of coolant operation in a high-pressure thermal management subsystem according to Embodiment 28 of the present disclosure;
FIG. 35 is a schematic diagram of refrigerant operation in a thermal management system and a schematic diagram of coolant operation in a high-pressure thermal management subsystem according to Embodiment 29 of the present disclosure;
FIG. 36 is a schematic diagram of refrigerant operation in a thermal management system and a schematic diagram of coolant operation in a high-pressure thermal management subsystem according to Embodiment 30 of the present disclosure;
FIG. 37 is a schematic diagram of refrigerant operation in a thermal management system and a schematic diagram of coolant operation in a high-pressure thermal management subsystem according to Embodiment 31 of the present disclosure;
FIG. 38 is a schematic diagram of refrigerant operation in a thermal management system and a schematic diagram of coolant operation in a high-pressure thermal management subsystem according to Embodiment 32 of the present disclosure;
FIG. 39 is a schematic diagram of refrigerant operation in a thermal management system and a schematic diagram of coolant operation in a high-pressure thermal management subsystem according to Embodiment 33 of the present disclosure;
FIG. 40 is a schematic diagram of refrigerant operation in a thermal management system and a schematic diagram of coolant operation in a high-pressure thermal management subsystem according to Embodiment 34 of the present disclosure;
FIG. 41 is a schematic diagram of refrigerant operation in a thermal management system and a schematic diagram of coolant operation in a high-pressure thermal management subsystem according to Embodiment 35 of the present disclosure;
FIG. 42 is a schematic diagram of refrigerant operation in a thermal management system and a schematic diagram of coolant operation in a high-pressure thermal management subsystem according to Embodiment 36 of the present disclosure;
FIG. 43 is a schematic diagram of refrigerant operation in a thermal management system and a schematic diagram of coolant operation in a high-pressure thermal management subsystem according to Embodiment 37 of the present disclosure;
FIG. 44 is a schematic diagram of refrigerant operation in a thermal management system and a schematic diagram of coolant operation in a high-pressure thermal management subsystem according to Embodiment 38 of the present disclosure;
FIG. 45 is a schematic diagram of refrigerant operation in a thermal management system and a schematic diagram of coolant operation in a high-pressure thermal management subsystem according to Embodiment 39 of the present disclosure;
FIG. 46 is a schematic diagram of refrigerant operation in a thermal management system and a schematic diagram of coolant operation in a high-pressure thermal management subsystem according to Embodiment 40 of the present disclosure;
FIG. 47 is a schematic diagram of refrigerant operation in a thermal management system and a schematic diagram of coolant operation in a high-pressure thermal management subsystem according to Embodiment 41 of the present disclosure;
FIG. 48 is a schematic diagram of refrigerant operation in a thermal management system and a schematic diagram of coolant operation in a high-pressure thermal management subsystem according to Embodiment 42 of the present disclosure;
FIG. 49 is a schematic diagram of refrigerant operation in a thermal management system and a schematic diagram of coolant operation in a high-pressure thermal management subsystem according to Embodiment 43 of the present disclosure;
FIG. 50 is a schematic diagram of refrigerant operation in a thermal management system and a schematic diagram of coolant operation in a high-pressure thermal management subsystem according to Embodiment 44 of the present disclosure;
FIG. 51 is a schematic diagram of refrigerant operation in a thermal management system and a schematic diagram of coolant operation in a high-pressure thermal management subsystem according to Embodiment 45 of the present disclosure;
FIG. 52 is a schematic diagram of refrigerant operation in a thermal management system and a schematic diagram of coolant operation in a high-pressure thermal management subsystem according to Embodiment 46 of the present disclosure;
FIG. 53 is a schematic diagram of refrigerant operation in a thermal management system and a schematic diagram of coolant operation in a high-pressure thermal management subsystem according to Embodiment 47 of the present disclosure;
FIG. 54 is a schematic diagram of refrigerant operation in a thermal management system and a schematic diagram of coolant operation in a high-pressure thermal management subsystem according to Embodiment 48 of the present disclosure;
FIG. 55 is a schematic diagram of refrigerant operation in a thermal management system and a schematic diagram of coolant operation in a high-pressure thermal management subsystem according to Embodiment 49 of the present disclosure;
FIG. 56 is a schematic diagram of refrigerant operation in a thermal management system and a schematic diagram of coolant operation in a high-pressure thermal management subsystem according to Embodiment 50 of the present disclosure;
FIG. 57 is a schematic diagram of refrigerant operation in a thermal management system and a schematic diagram of coolant operation in a high-pressure thermal management subsystem according to Embodiment 51 of the present disclosure;
FIG. 58 is a schematic diagram of refrigerant operation in a thermal management system and a schematic diagram of coolant operation in a high-pressure thermal management subsystem according to Embodiment 52 of the present disclosure;
FIG. 59 is a schematic diagram of refrigerant operation in a thermal management system and a schematic diagram of coolant operation in a high-pressure thermal management subsystem according to Embodiment 53 of the present disclosure;
FIG. 60 is a schematic diagram of refrigerant operation in a thermal management system and a schematic diagram of coolant operation in a high-pressure thermal management subsystem according to Embodiment 54 of the present disclosure;
FIG. 61 is a schematic diagram of refrigerant operation in a thermal management system and a schematic diagram of coolant operation in a high-pressure thermal management subsystem according to Embodiment 55 of the present disclosure;
FIG. 62 is a schematic diagram of refrigerant operation in a thermal management system and a schematic diagram of coolant operation in a high-pressure thermal management subsystem according to Embodiment 56 of the present disclosure;
FIG. 63 is a schematic diagram of refrigerant operation in a thermal management system and a schematic diagram of coolant operation in a high-pressure thermal management subsystem according to Embodiment 57 of the present disclosure;
FIG. 64 is a schematic diagram of refrigerant operation in a thermal management system and a schematic diagram of coolant operation in a high-pressure thermal management subsystem according to Embodiment 58 of the present disclosure;
FIG. 65 is a schematic diagram of refrigerant operation in a thermal management system and a schematic diagram of coolant operation in a high-pressure thermal management subsystem according to Embodiment 59 of the present disclosure;
FIG. 66 is a schematic diagram of refrigerant operation in a thermal management system and a schematic diagram of coolant operation in a high-pressure thermal management subsystem according to Embodiment 60 of the present disclosure; and
FIG. 67 is a schematic diagram of a minor circulation loop of a thermal management system according to the present disclosure.

### Reference signs:

Thermal management system 100, high-pressure thermal management subsystem 1001,
refrigerant circulation loop 101, circulation loop 102, minor circulation loop 103,
first exhaust flow channel 10a, second exhaust flow channel 10b, third exhaust flow channel 10c, bypass flow path 10d, heat exchange flow channel 10e, first heat exchange flow channel 10f, second heat exchange flow channel 10g,
compressor 11, first heat exchanger 12, evaporator 120, second heat exchanger 13, out-of-vehicle condenser 130, storage 14, in-vehicle condenser 15, gas-liquid separator 16,
heat exchange assembly 2, first heat exchange plate 21, second heat exchange plate 22,
first valve group 3, first electronic expansion valve 31, second electronic expansion valve 32,
second valve group 4, first throttling element 41, second throttling element 42,
third valve group 5,
first on-off valve 61, second on-off valve 62, third on-off valve 63, fourth on-off valve 64, third electronic expansion valve 65, fourth electronic expansion valve 66,
first check valve 71, second check valve 72, third check valve 73, fourth check valve 74,
third heat exchanger 81, first flow channel 81a, second flow channel 81b, first radiator 82, second radiator 83, switching valve group 84, first valve 841, second valve 842, third valve 843, fourth valve 844, water pump 85, water temperature sensor 86, kettle 87.

### DETAILED DESCRIPTION

Embodiments of the present disclosure are described in detail below, and examples of the embodiments are shown in accompanying drawings, where the same or similar elements or the elements having same or similar functions are denoted by the same or similar reference signs throughout the description. The embodiments described below with reference to the accompanying drawings are exemplary, and are only intended to explain the present disclosure and cannot be construed as a limitation to the present disclosure.

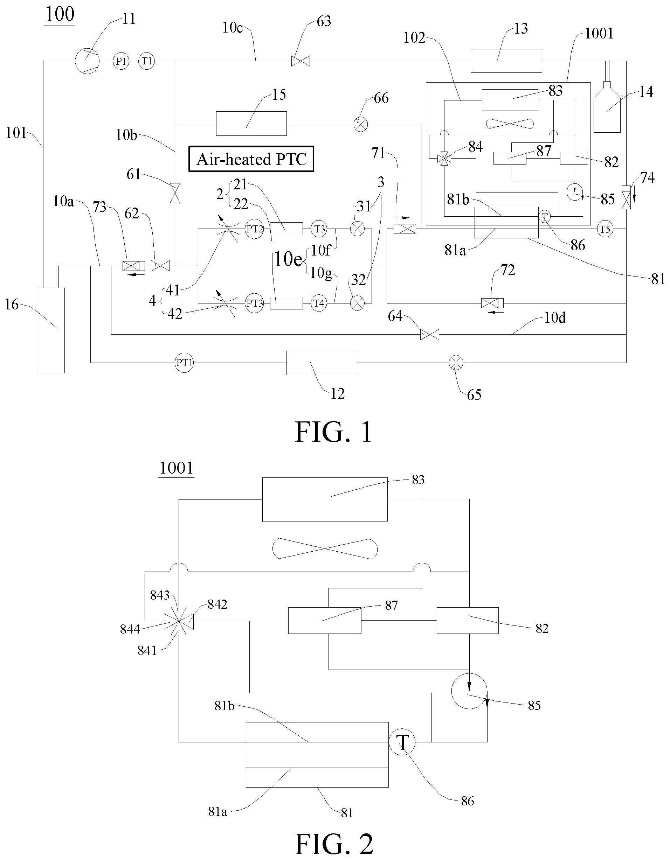

A thermal management system 100 according to an embodiment of the present disclosure is described below with reference to FIG. 1 to FIG. 67.

The thermal management system 100 according to the embodiment of the present disclosure includes: a compressor 11, a first heat exchanger 12 and a heat exchange assembly 2. An exhaust port of the compressor 11 is connected to the heat exchange assembly 2. A first port of the first heat exchanger 12 is connected to an air inlet of the compressor 11, and a second port of the first heat exchanger 12 is connected to the heat exchange assembly 2. The heat exchange assembly 2 includes a first heat exchange plate 21 and a second heat exchange plate 22 that are arranged in parallel, and the first heat exchange plate 21 and the second heat exchange plate 22 each are configured to adjust a temperature of a battery module.

The thermal management system 100 according to the present disclosure is used for a vehicle. The vehicle may be a fuel vehicle, a gas vehicle, a new energy vehicle, or a rail vehicle. The new energy vehicle may be a battery electric vehicle, a hybrid vehicle, an extendedrange vehicle, or the like. The vehicle further includes a battery module, and the battery module may be configured to supply power to the vehicle. For example, the battery module may be used as an operating power source for the vehicle, or the battery module may be used as a driving power source for the vehicle, to replace or partially replace fuel oil, natural gas, or the like to provide driving power for the vehicle, or the battery module may be configured to supply power to some components of the vehicle, such as a motor, so that the battery module can be configured to meet an operating power demand of at least one of vehicle starting, navigation, driving, and the like.

When the thermal management system 100 is in operation, a refrigerant flows in from the air inlet of the compressor 11, and the low-temperature and low-pressure gaseous refrigerant is compressed by the compressor 11 to become a high-temperature and high-pressure gaseous refrigerant, which flows out from the exhaust port of the compressor 11. The first port of the first heat exchanger 12 is connected to the air inlet of the compressor 11, and the second port of the first heat exchanger 12 is connected to the heat exchange assembly 2. Therefore, the refrigerant flows out of the compressor 11, then flows through the heat exchange assembly 2, then flows through the first heat exchanger 12, and finally returns to the compressor 11, thereby forming a refrigerant loop and completing one cycle.

The refrigerant loop is formed by the compressor 11, the heat exchange assembly 2 and the first heat exchanger 12 together. It can be understood that the refrigerant loop further includes other elements such as a throttling member, but to simplify the description of the solution and facilitate understanding, only the compressor 11 and a heat exchange member are selected to define the refrigerant loop when the refrigerant loop is described.

In the refrigerant loop formed by the compressor 11, the heat exchange assembly 2 and the first heat exchanger 12 together, the high-temperature and high-pressure gaseous refrigerant flowing out of the exhaust port of the compressor 11 exchanges heat at the heat exchange assembly 2, so that the refrigerant releases heat and is liquefied, and then the refrigerant passes through the first heat exchanger 12 after being throttled and depressurized, absorbs heat and is vaporized at the first heat exchanger 12 to finally become a low-temperature and low-pressure gaseous refrigerant, which flows in from the air inlet of the compressor 11.

The heat exchange assembly 2 includes the first heat exchange plate 21 and the second heat exchange plate 22 that are arranged in parallel. Therefore, in the refrigerant loop formed by the compressor 11, the heat exchange assembly 2 and the first heat exchanger 12 together, the refrigerant directly flows through the first heat exchange plate 21 and the second heat exchange plate 22, and releases heat at the first heat exchange plate 21 and the second heat exchange plate 22 to exchange heat with the battery module, so as to heat the battery module, to allow the battery module to have an appropriate operating temperature, thereby ensuring that the battery module operates stably and reliably. For example, when there is a low ambient temperature in winter, the battery module may be heated to increase a starting speed of the battery module.

In addition, the thermal management system 100 according to the present disclosure further includes another element. In a refrigerant loop formed by the compressor 11, the heat exchange assembly 2 and another element, the refrigerant may be further controlled to absorb heat at the heat exchange assembly 2 and exchange heat with the battery module, so as to refrigerate the battery module, to allow the battery module to have an appropriate operating temperature, thereby ensuring that the battery module operates stably and reliably. For example, when there is a too high ambient temperature in summer or there is a high operating temperature of the battery module, the battery module may be cooled to improve operating safety of the battery module and prolong operating stability of the battery module.

The heat exchange assembly 2 according to the present disclosure includes the first heat exchange plate 21 and the second heat exchange plate 22, and the first heat exchange plate 21 and the second heat exchange plate 22 may be in contact with different end surfaces of the battery module for heat exchange, to adjust the temperature of the battery module, which can improve heat exchange efficiency and allow the battery module to quickly reach an appropriate operating temperature. Moreover, the refrigerant directly flows in the first heat exchange plate 21 and the second heat exchange plate 22, and the first heat exchange plate 21 and the second heat exchange plate 22 are in direct contact with the battery module to exchange heat, which can not only reduce the arrangement difficulty, but also improve heat exchange efficiency, allow the battery module to quickly reach an appropriate operating temperature, and improve operating stability of the battery module.

In the thermal management system 100 according to the embodiment of the present disclosure, the first heat exchange plate 21 and the second heat exchange plate 22 are arranged to exchange heat with the battery module, and may be in direct contact with different end surfaces of the battery module for heat exchange, which can not only reduce the arrangement difficulty, but also improve heat exchange efficiency, allow the battery module to quickly reach an appropriate operating temperature, and improve operating stability of the battery module and operating efficiency of the thermal management system 100.

In some embodiments of the present disclosure, as shown in FIG. 1, the thermal management system 100 further includes a second heat exchanger 13. A first port of the second heat exchanger 13 is connected to the exhaust port of the compressor 11, and a second port of the second heat exchanger 13 is connected to the heat exchange assembly 2. The heat exchange assembly 2 is in communication with the air inlet of the compressor 11.

In a refrigerant loop formed by the compressor 11, the second heat exchanger 13 and the heat exchange assembly 2 together, a high-temperature and high-pressure gaseous refrigerant flowing out of the exhaust port of the compressor 11 exchanges heat at the second heat exchanger 13, so that the refrigerant releases heat and is liquefied, and then the refrigerant passes through the heat exchange assembly 2 after being throttled and depressurized, absorbs heat and is vaporized at the heat exchange assembly 2 to finally become a low-temperature and low-pressure gaseous refrigerant, which flows in from the air inlet of the compressor 11. The refrigerant absorbs heat when flowing through the heat exchange assembly 2, and the heat exchange assembly 2 exchanges heat with the battery module, so as to refrigerate the battery module, to allow the battery module to have an appropriate operating temperature, thereby ensuring that the battery module operates stably and reliably.

In some embodiments of the present disclosure, the exhaust port of the compressor 11 is in selective communication with the heat exchange assembly 2 or the first port of the second heat exchanger 13, and the air inlet of the compressor 11 is in selective communication with the first port of the first heat exchanger 12 or the heat exchange assembly 2.

The compressor 11, the heat exchange assembly 2 and the first heat exchanger 12 may form a refrigerant loop together, and the compressor 11, the heat exchange assembly 2 and the second heat exchanger 13 may also form a refrigerant loop together. The flow of refrigerant can be controlled by selective communication of the exhaust port and the air inlet of the compressor 11, and an element can achieve different functions in different refrigerant loops, thereby reducing the number of elements arranged, manufacturing costs and the arrangement difficulty.

When the exhaust port of the compressor 11 is in communication with the heat exchange assembly 2 and the air inlet of the compressor 11 is in communication with the first port of the first heat exchanger 12, the refrigerant releases heat at the heat exchange assembly 2 and absorbs heat at the first heat exchanger 12, so that the heat exchange assembly 2 can be heated and the first heat exchanger 12 can be refrigerated.

When the exhaust port of the compressor 11 is in communication with the first port of the second heat exchanger 13, and the air inlet of the compressor 11 is in communication with the heat exchange assembly 2, the refrigerant releases heat at the second heat exchanger 13 and absorbs heat at the heat exchange assembly 2, so that the heat exchange assembly 2 can be refrigerated and the second heat exchanger 13 can be heated.

In some embodiments of the present disclosure, the exhaust port of the compressor is connected to the second port of the first heat exchanger; the exhaust port of the compressor is in selective communication with the second port of the first heat exchanger or the heat exchange assembly, and the air inlet of the compressor is in selective communication with the heat exchange assembly or the first port of the first heat exchanger, so that one first heat exchanger can heat and refrigerate the battery module.

When an air-conditioning circulation loop is in operation, a refrigerant flows in from the air inlet of the compressor, and the low-temperature and low-pressure gaseous refrigerant is compressed by the compressor to become a high-temperature and high-pressure gaseous refrigerant, which flows out from the exhaust port of the compressor. Therefore, the first heat exchanger is connected to the exhaust port of the compressor, and the refrigerant can release heat at the first heat exchanger. The exhaust port of the compressor may be in communication with the first heat exchanger, and the exhaust port of the compressor may be also in communication with the heat exchange assembly 2. The thermal management system 100 can control the refrigerant to flow to the first heat exchanger or to the heat exchange assembly, to cause the refrigerant to release heat at the first heat exchanger or at the heat exchange assembly 2.

Similarly, the air inlet of the compressor is in selective communication with the heat exchange assembly or the first port of the first heat exchanger, and the refrigerant may flow back to the compressor through the heat exchange assembly, or the refrigerant may flow back to the compressor through the first heat exchanger. Alternatively, when the exhaust port of the compressor is in communication with the heat exchange assembly, the battery module is heated, or when the exhaust port of the compressor is in communication with the first heat exchanger, the battery module is refrigerated.

In some embodiments of the present disclosure, as shown in FIG. 1, the thermal management system 100 further includes a storage 14, and the storage 14 is connected between the exhaust port of the compressor 11 and the air inlet of the compressor 11.

It can be understood that a state of matter of the refrigerant in the heat exchange assembly 2 when the heat exchange assembly 2 heats the battery module is different from that when the heat exchange assembly cools the battery module, while a volume of a gaseous refrigerant is greater than that of a liquid refrigerant under the same mass, resulting in that a refrigerant demand when the battery module is heated is greater than a refrigerant demand when the battery module is cooled.

With the arrangement of the storage 14, the refrigerant can be stored and discharged. When the heat exchange assembly 2 heats the battery module, the storage 14 releases the stored refrigerant and supplements the refrigerant to the refrigerant loop to meet the refrigerant demand when the battery module is heated. When the heat exchange assembly 2 refrigerates the battery module, the storage 14 stores the refrigerant flowing therethrough, thereby reducing the amount of the refrigerant in the refrigerant loop and meeting the refrigerant demand when the battery module is refrigerated.

In an embodiment of the present disclosure, the storage 14 is configured as a liquid storage dryer. An inlet end of the liquid storage dryer is connected to the second end of the second heat exchanger 13, and an outlet end of the liquid storage dryer is connected to the heat exchange assembly 2. The liquid storage dryer is configured to store a liquid refrigerant and discharge the stored liquid refrigerant. The liquid storage dryer is connected between the second heat exchanger 13 and the heat exchange assembly 2. The refrigerant flowing out of the second heat exchanger 13 may be stored in the liquid storage dryer, and the refrigerant stored in the liquid storage dryer may further flow to the heat exchange assembly 2.

In addition, the liquid storage dryer can further filter out moisture and impurities in the refrigerant, avoid damaging or blocking a refrigerant pipeline, prolong the service life of the refrigerant pipeline, and allow the refrigerant to flow smoothly.

In some other embodiments of the present disclosure, the storage 14 is configured such that the refrigerant can release heat and be liquefied in the storage 14, and the storage 14 can store the liquid refrigerant. The storage 14 is connected between the exhaust port of the compressor 11 and the air inlet of the compressor 11, and the storage 14 can liquefy the refrigerant flowing out of the exhaust port of the compressor 11 and then store the refrigerant in the storage 14.

In some embodiments of the present disclosure, the thermal management system 100 further includes a fourth heat exchanger, and the fourth heat exchanger is connected between the storage 14 and the exhaust port of the compressor 11. The fourth heat exchanger exchanges heat with the refrigerant, and the refrigerant can release heat and be liquefied at the fourth heat exchanger. The liquid refrigerant continues to flow to the storage 14 and can be stored in the storage 14.

In some embodiments of the present disclosure, a first port of the fourth heat exchanger is connected to the exhaust port of the compressor 11, and a second port of the fourth heat exchanger is connected to the heat exchange assembly 2. After flowing out of the exhaust port of the compressor 11, the refrigerant releases heat and is liquefied at the fourth heat exchanger. Then part of the liquid refrigerant is stored in the storage 14, and the refrigerant continues to flow to the heat exchange assembly 2, and is suitable for refrigerating the battery module. That is, the fourth heat exchanger is the second heat exchanger 13.

In some embodiments of the present disclosure, the thermal management system 100 further includes a first throttling member, and the first throttling member is arranged between the storage 14 and the air inlet of the compressor 11. The refrigerant flowing out of the storage 14 is throttled and depressurized by the first throttling member, and then continues to flow in the refrigerant loop, so as to prevent the high-pressure refrigerant from damaging elements and ensure safe and normal operation of the elements.

In some embodiments of the present disclosure, the thermal management system 100 further includes a third on-off valve 63, and the third on-off valve 63 is arranged between the storage 14 and the exhaust port of the compressor 11.

The third on-off valve 63 can control flow or interruption of the refrigerant in a third exhaust flow channel 10c. When the third on-off valve 63 connects the third exhaust flow channel 10c, the refrigerant may flow from the exhaust port of the compressor 11 to the storage 14 and can be stored in the storage 14. When the third on-off valve 63 disconnects the third exhaust flow channel 10c, the refrigerant cannot flow to the storage 14, but in this case, the refrigerant can still flow out of the storage 14.

In some embodiments of the present disclosure, the first heat exchange plate 21 and the second heat exchange plate 22 are arranged on two opposite sides of the battery module. Compared with a design manner of arranging one heat exchange plate, the first heat exchange plate 21 and the second heat exchange plate 22 can refrigerate or heat the two opposite sides of the battery, which can improve efficiency of refrigerating or heating the battery module, to allow the battery module to quickly reach an appropriate operating temperature and improve operating stability of the battery module.

In some embodiments of the present disclosure, as shown in FIG. 1, the heat exchange assembly 2 further includes a first valve group 3. The first valve group 3 is arranged at a second port of the heat exchange assembly 2, and the second port of the heat exchange assembly 2 is in communication with the second end of the second heat exchanger 13.

When a refrigerant flows in the refrigerant loop formed by the compressor 11, the second heat exchanger 13 and the heat exchange assembly 2 together, after releasing heat in the second heat exchanger 13, the refrigerant becomes a low-temperature and high-pressure refrigerant. Then the refrigerant is depressurized by the first valve group 3 to become a low-temperature and low-pressure refrigerant, then flows to the heat exchange assembly 2 for heat absorption, and absorbs heat when passing through the heat exchange assembly 2 to be evaporated into a low-temperature and low-pressure gaseous refrigerant. The low-temperature and low-pressure gaseous refrigerant flows into the compressor 11 from the air inlet to complete one cycle.

It can be understood that the battery module has high operating safety, while there are limited flow paths arranged in the first heat exchange plate 21 and the second heat exchange plate 22, so that if a high-pressure refrigerant directly leads to the first heat exchange plate 21 and the second heat exchange plate 22, the first heat exchange plate 21 and the second heat exchange plate 22 are at risk of being impacted and damaged by the high-pressure refrigerant, and the outflow of the refrigerant from the first heat exchange plate 21 or the second heat exchange plate 22 may endanger the operating safety of the battery module. Therefore, according to the present disclosure, the first valve group 3 is arranged between the exhaust port and the heat exchange assembly 2. When flowing through the heat exchange assembly 2, the refrigerant is first throttled and depressurized by the first valve group 3, and then the depressurized refrigerant flows through the first heat exchange plate 21 and the second heat exchange plate 22, so as to improve operating stability of the first heat exchange plate 21 and the second heat exchange plate 22 and ensure safety of the battery module.

When the refrigerant flows in a refrigerant loop formed by the compressor 11, the first heat exchanger 12 and the heat exchange assembly 2 together, after releasing heat in the heat exchange assembly 2, the refrigerant becomes a low-temperature and high-pressure refrigerant. Then the refrigerant is depressurized by the first valve group 3 to become a low-temperature and low-pressure refrigerant, then flows to the first heat exchanger 12 for heat absorption, and absorbs heat when passing through the heat exchange assembly 2 to be evaporated into a low-temperature and low-pressure gaseous refrigerant. The low-temperature and low-pressure gaseous refrigerant flows into the compressor 11 from the air inlet to complete one cycle. The first valve group 3 achieves throttling and depressurization functions.

In some embodiments of the present disclosure, the first valve group 3 includes a first control valve and a second control valve that are connected in parallel. The first control valve is connected in series to the first heat exchange plate 21 and the second control valve is connected in series to the second heat exchange plate 22. The first control valve and the second control valve can operate independently of each other.

In an embodiment of the present disclosure, the first control valve is configured as a first electronic expansion valve 31 and the second control valve is configured as a second electronic expansion valve 32. The electronic expansion valve has a function of flow regulation. The electronic expansion valve can depressurize the refrigerant flowing therethrough, and then the depressurized refrigerant flows through the first heat exchange plate 21 and the second heat exchange plate 22, so as to improve operating stability of the first heat exchange plate 21 and the second heat exchange plate 22. The electronic expansion valve further has an on-off function, and can further selectively seal a pipeline to control the flow or stagnation of the refrigerant in the pipeline where the electronic expansion valve is located. The first electronic expansion valve 31 and the second electronic expansion valve 32 operate independently of each other. The first electronic expansion valve 31 can control the flow or interruption of the refrigerant in a pipeline flowing to the first heat exchange plate 21, and the second electronic expansion valve 32 can control the flow or interruption of the refrigerant in a pipeline flowing to the second heat exchange plate 22.

When both the first electronic expansion valve 31 and the second electronic expansion valve 32 are closed, a pipeline leading to the heat exchange assembly 2 is sealed. The refrigerant flowing out of the exhaust port cannot flow back to the air inlet through heat exchange assembly 2, and the refrigerant flowing out of the second heat exchanger 13 cannot flow back to the air inlet through heat exchange assembly 2.

In some embodiments of the present disclosure, the heat exchange assembly 2 further includes a second valve group 4. The second valve group 4 is arranged at a first port of the heat exchange assembly 2, and the first port of the heat exchange assembly 2 is connected to the exhaust port of the compressor 11.

When the refrigerant flows in the refrigerant loop formed by the compressor 11, the first heat exchanger 12 and the heat exchange assembly 2 together, the high-temperature and high-pressure gaseous refrigerant is depressurized by the second valve group 4 to become a low-temperature and low-pressure refrigerant, and then flows to the first heat exchanger 12 to release heat. The refrigerant is first throttled and depressurized by the second valve group 4 when flowing through the heat exchange assembly 2, and then the depressurized refrigerant flows through the first heat exchange plate 21 and the second heat exchange plate 22, so as to improve operating stability of the first heat exchange plate 21 and the second heat exchange plate 22 and ensure safety of the battery module.

In some embodiments of the present disclosure, as shown in FIG. 1, the second valve group 4 includes a first throttling element 41 and a second throttling element 42 that are connected in parallel. The first throttling element 41 is connected in series to the first heat exchange plate 21, and the second throttling element 42 is connected in series to the second heat exchange plate 22. The first throttling element 41 and the second throttling element 42 can throttle and depressurize the refrigerant flowing therethrough, and then the depressurized refrigerant flows through the first heat exchange plate 21 and the second heat exchange plate 22, so as to improve operating stability of the first heat exchange plate 21 and the second heat exchange plate 22. In addition, both the first throttling element 41 and the second throttling element 42 are variablecaliber throttle valves, so that a refrigerant flow rate of the compressor 11 to the first heat exchange plate 21 and the second heat exchange plate 22 can be adjusted.

In an embodiment of the present disclosure, as shown in FIG. 1, a refrigerant circulation loop 101 includes a heat exchange flow channel 10e. The heat exchange flow channel 10e includes: a first heat exchange flow channel 10f and a second heat exchange flow channel 10g. The first heat exchange plate 21, the first throttling element 41 and the first electronic expansion valve 31 are arranged on the first heat exchange flow channel 10f. The first heat exchange plate 21 is connected between the first throttling element 41 and the first electronic expansion valve 31, and the first throttling element 41 is arranged closer to the exhaust port than the first electronic expansion valve 31. Similarly, the second heat exchange plate 22, the second throttling element 42 and the second electronic expansion valve 32 are arranged on the second heat exchange flow channel 10g. The second heat exchange plate 22 is connected between the second throttling element 42 and the second electronic expansion valve 32, and the second throttling element 42 is arranged closer to the exhaust port than the second electronic expansion valve 32.

The first heat exchange flow channel 10f and the second heat exchange flow channel 10g are connected in parallel with each other. One end of each of the first heat exchange flow channel 10f and the second heat exchange flow channel 10g connected in parallel is connected to the exhaust port, and the other end of each of the first heat exchange flow channel 10f and the second heat exchange flow channel 10g connected in parallel is connected to the second end of the second heat exchanger 13.

In some embodiments of the present disclosure, as shown in FIG. 1, the thermal management system 100 further includes: an in-vehicle condenser 15. The exhaust port of the compressor 11 is connected to a first end of the in-vehicle condenser 15, and a second end of the in-vehicle condenser 15 is connected to the second port of the first heat exchanger 12. The exhaust port of the compressor 11 is in selective communication with at least one of the first end of the in-vehicle condenser 15 and the heat exchange assembly 2. That is, the in-vehicle condenser 15 is arranged in parallel with the heat exchange assembly 2.

The in-vehicle condenser 15 is suitable for heating a passenger compartment. When a refrigerant flows in a refrigerant loop formed by the compressor 11, the in-vehicle condenser 15 and the first heat exchanger 12 together, the high-temperature and high-pressure gaseous refrigerant flowing out of the exhaust port of the compressor 11 exchanges heat at the in-vehicle condenser 15, so that the refrigerant releases heat and is liquefied, and then the refrigerant passes through the first heat exchanger 12 after being throttled and depressurized, absorbs heat and is vaporized at the first heat exchanger 12 to finally become a low-temperature and low-pressure gaseous refrigerant, which flows in from the air inlet of the compressor 11, thereby completing one cycle.

In some embodiments of the present disclosure, the first heat exchanger 12 is an evaporator 120.

When the refrigerant flows in the refrigerant loop formed by the compressor 11, the heat exchange assembly 2 and the first heat exchanger 12 together, the refrigerant releases heat at the heat exchange assembly 2 and absorbs heat at the evaporator 120, so as to heat the battery module and refrigerate the passenger compartment.

In some embodiments of the present disclosure, the second heat exchanger 13 is an out-of-vehicle condenser 130. The refrigerant releases heat through the out-of-vehicle condenser 130, and the out-of-vehicle condenser 130 can be used for heating. For example, when there is a low ambient temperature in winter, an element of the vehicle needs to be preheated for starting, and a starting speed of the vehicle can be increased by heating the element through the out-of-vehicle condenser 130.

When the refrigerant flows in a refrigerant loop formed by the compressor 11, the first heat exchanger 12 and the second heat exchanger 13 together, the refrigerant releases heat at the out-of-vehicle condenser 130 and absorbs heat at the evaporator 120, so as to heat an element outside the vehicle and refrigerate the passenger compartment.

When the refrigerant flows in the refrigerant loop formed by the compressor 11, the heat exchange assembly 2 and the second heat exchanger 13 together, the refrigerant releases heat at the out-of-vehicle condenser 130 and absorbs heat at the heat exchange assembly 2, so as to refrigerate the battery module and heat the element outside the vehicle.

In some embodiments of the present disclosure, the thermal management system 100 further includes a refrigerant circulation loop 101, and the refrigerant loop formed by the compressor 11, the first heat exchanger 12 and the heat exchange assembly 2 together, and the like are all a part of the refrigerant circulation loop 101.

In some embodiments of the present disclosure, as shown in FIG. 1, the thermal management system 100 further includes a gas-liquid separator 16, and the gas-liquid separator 16 is in communication with the air inlet of the compressor 11. After being throttled and evaporated, the refrigerant becomes a low-temperature and low-pressure gaseous refrigerant. Because evaporation and heat absorption cannot ensure that all the refrigerant is completely converted into a gaseous refrigerant, the refrigerant needs to first flow into the gas-liquid separator 16 before flowing back into the compressor 11, and the gas-liquid separator 16 separates the gaseous refrigerant from the liquid refrigerant, and only drives the low-temperature and low-pressure gaseous refrigerant to flow to the compressor 11, so as to prevent liquid droplets from having a liquid impact on functional parts in the compressor 11 and ensure safe and normal operation of the compressor 11.

In some embodiments of the present disclosure, the thermal management system 100 further includes a control valve group, and the control valve group is arranged on the refrigerant circulation loop 101. The control valve group operates to allow the refrigerant at the exhaust port to flow to the out-of-vehicle condenser 130 or the heat exchange assembly 2. With the arrangement of the control valve group, a flow direction of the refrigerant can be controlled to control the operation of the thermal management system 100.

The control valve group is connected to the out-of-vehicle condenser 130 and the second valve group 4. The control valve group operates to allow the refrigerant at the exhaust port to flow to the out-of-vehicle condenser 130, or the control valve group operates to allow the refrigerant at the exhaust port to flow to the heat exchange assembly 2, or the control valve group operates to allow the refrigerant at the exhaust port to flow to the out-of-vehicle condenser 130 and the heat exchange assembly 2.

When the control valve group operates to allow the refrigerant at the exhaust port to flow to the out-of-vehicle condenser 130 and the heat exchange assembly 2, the refrigerant flows in a refrigerant loop formed by the compressor 11, the evaporator 120 and the out-of-vehicle condenser 130 together, and in addition, the refrigerant flows in a refrigerant loop formed by the compressor 11, the heat exchange assembly 2 and the evaporator 120 together. The refrigerant releases heat at the heat exchange assembly 2 and absorbs heat at the evaporator 120, so as to heat the battery module and the element outside the vehicle and refrigerate the passenger compartment.

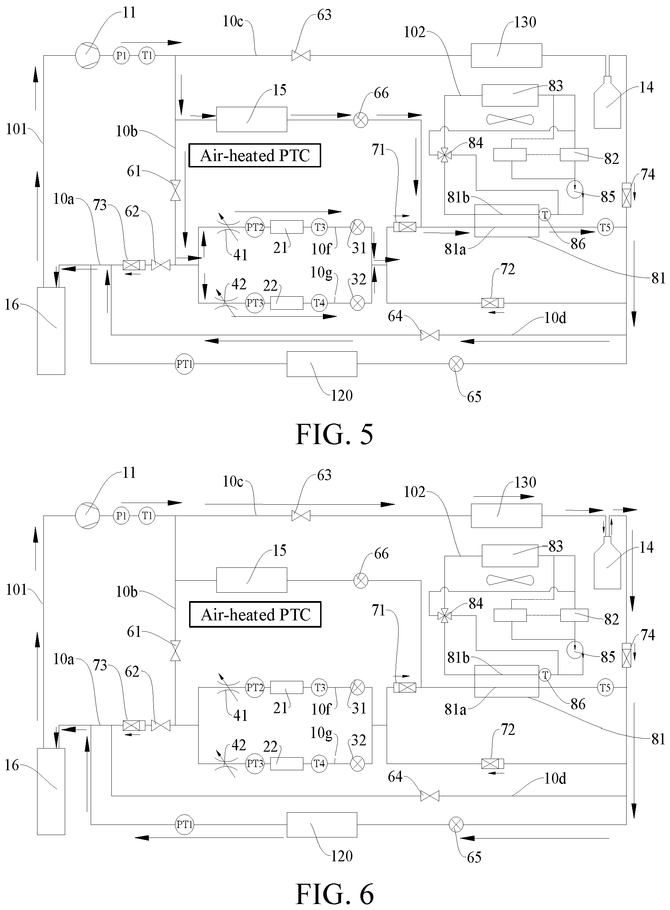

In some embodiments of the present disclosure, as shown in FIG. 6, the thermal management system 100 includes a first exhaust flow channel 10a. A second throttle valve group is connected to the air inlet through the first exhaust flow channel 10a, and the refrigerant flowing through the heat exchange assembly 2 can flow back to the air inlet through the first exhaust flow channel 10a. For example, when the battery module is refrigerated, the refrigerant flows out from the exhaust port, releases heat through the out-of-vehicle condenser 130 and then enters the heat exchange flow channel 10e to absorb heat at the heat exchange assembly 2, and then flows back to the air inlet through the first exhaust flow channel 10a.

The thermal management system 100 further includes a second exhaust flow channel 10b connected to the exhaust port. The second exhaust flow channel 10b is connected to the first exhaust flow channel 10a, so that the second throttle valve group is also connected to the exhaust port through the second exhaust flow channel 10b, and the refrigerant may flow to the heat exchange assembly 2 through the second exhaust flow channel 10b. For example, when the battery module is heated, the refrigerant flows out from the exhaust port, flows to the heat exchange assembly 2 through the second heat exchange flow channel 10g, and releases heat at the heat exchange assembly 2.

The thermal management system 100 further includes a third exhaust flow channel 10c that communicates the exhaust port with the out-of-vehicle condenser 130. The refrigerant may flow to the out-of-vehicle condenser 130 through the third exhaust flow channel 10c, and release heat at the out-of-vehicle condenser 130.

In some embodiments of the present disclosure, the control valve group includes a first on-off valve 61, a second on-off valve 62 and a third on-off valve 63. The first on-off valve 61 is connected in series to the second exhaust flow channel 10b, and the third on-off valve 63 is connected between the out-of-vehicle condenser 130 and the exhaust port. That is, the third on-off valve 63 is connected in series to the third exhaust flow channel 10c. The second on-off valve 62 is connected in series to the first exhaust flow channel 10a. When the second on-off valve 62 is closed, the refrigerant in the second exhaust flow channel 10b is prevented from flowing toward an air return port.

The first on-off valve 61 can control connection and disconnection of the second exhaust flow channel 10b to control whether the refrigerant flows from the exhaust port to the heat exchange assembly 2. When the first on-off valve 61 is closed, the refrigerant is prevented from flowing toward the heat exchange assembly 2. The third on-off valve 63 can control connection and disconnection of the third exhaust flow channel 10c to control whether the refrigerant flows from the exhaust port to the out-of-vehicle condenser 130. When the third on-off valve 63 is closed, the refrigerant is prevented from flowing toward the out-of-vehicle condenser 130.

As shown in FIG. 1, the first exhaust flow channel 10a is connected to the air return port, and the second exhaust flow channel 10b is connected to the exhaust port. The second exhaust flow channel 10b is connected to the first exhaust flow channel 10a. When the first on-off valve 61 controls the second exhaust flow channel 10b to be connected, the refrigerant flowing out from the exhaust port flows from the second exhaust flow channel 10b to the first exhaust flow channel 10a, and then directly flows back to the air return port. Therefore, the second on-off valve 62 is arranged at the first exhaust flow channel 10a, so that the second on-off valve 62 can control connection and disconnection of the first exhaust flow channel 10a. When the second on-off valve 62 is closed, the refrigerant in the second exhaust flow channel 10b is prevented from flowing toward the air inlet.

In some embodiments of the present disclosure, a third control valve is connected to a second end of the evaporator 120, and a second end of the out-of-vehicle condenser 130 is in selective communication with at least one of the first valve group 3 and the third control valve.

When there is a too high external environment, the evaporator 120 is suitable for refrigerating the passenger compartment to reduce the temperature of the passenger compartment and improve user comfort. Optionally, the refrigerant absorbs heat at the evaporator 120, and the cooled airflow is provided to the passenger compartment through an air duct system, so as to blow cold air to and refrigerate the passenger compartment. It should be noted that a specific structure of the air duct system is not limited. For example, the air duct system may include an air duct, a fan configured to circulate an airflow in the air duct, a cold air and warm air damper for controlling connection and disconnection of the air duct, and the like. The air duct is suitable for supplying air to the passenger compartment through a vent. In addition, the air duct system feeds the airflow to unlimited positions in the passenger compartment, and the positions can be determined based on the position of the vent. For example, the airflow may be fed to a vehicle window, an upper body or face of a front (or rear) passenger, a lower body or feet of the front (or rear) passenger, or the like. This is not limited herein.

The evaporator 120 can further evaporate and vaporize the refrigerant. The refrigerant absorbs heat and is liquefied at the evaporator 120, and the liquid refrigerant is transformed into a gaseous refrigerant. Then the gaseous refrigerant is conveyed to the air return port to prevent liquid droplets from having a liquid impact on functional parts in the compressor 11 and ensure safe and normal operation of the compressor 11.

The second end of the out-of-vehicle condenser 130 is in selective communication with at least one of the heat exchange assembly 2 and the evaporator 120, and the refrigerant releases heat through the out-of-vehicle condenser 130 to become a low-temperature and high-pressure liquid refrigerant. When the second end of the out-of-vehicle condenser 130 is in communication with the heat exchange assembly 2, the refrigerant may flow to the first valve group 3, and the refrigerant is depressurized by the first valve group 3 and the second valve group 4 and vaporized by the heat exchange assembly 2 to become a low-temperature and low-pressure gaseous refrigerant, which flows to the air return port through the first exhaust flow channel 10a. When the second end of the out-of-vehicle condenser 130 is in communication with the evaporator 120, the refrigerant may flow to the third control valve, and the refrigerant is depressurized by the third control valve and vaporized by the evaporator 120 to become a low-temperature and low-pressure gaseous refrigerant, which flows to the air return port.

The second end of the out-of-vehicle condenser 130 may be separately in communication with the first valve group 3, or the second end of the out-of-vehicle condenser 130 may alternatively separately be in communication with the third control valve alone, or the second end of the out-of-vehicle condenser 130 may alternatively be in communication with the first valve group 3 and the third control valve at the same time, which can be selected based on actual use.

In an embodiment of the present disclosure, the third control valve is a third electronic expansion valve 65. The electronic expansion valve has on-off and flow adjustment functions. The third electronic expansion valve 65 can throttle and depressurize the refrigerant flowing therethrough, and the depressurized refrigerant is conveyed to the evaporator 120 to ensure normal operation of the evaporator 120. The electronic expansion valve can selectively seal a pipeline to control the flow or stagnation of the refrigerant in the pipeline where the electronic expansion valve is located. The third electronic expansion valve 65 can control connection or disconnection between the second end of the out-of-vehicle condenser 130 and the evaporator 120.

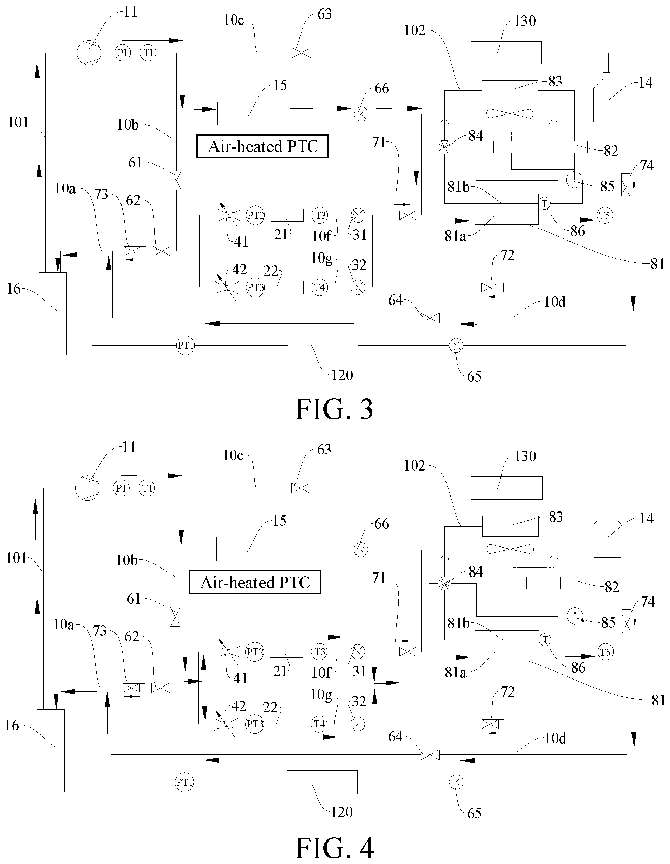

In some embodiments of the present disclosure, as shown in FIG. 1 and FIG. 4, the thermal management system 100 further includes a bypass flow path 10d. A fourth on-off valve 64 is connected in series to the bypass flow path 10d, and the bypass flow path 10d is connected in parallel to the evaporator 120 and a third throttling element that are connected in series. The fourth on-off valve 64 can control connection and disconnection of the bypass flow path 10d. When the fourth on-off valve 64 connects the bypass flow path 10d, the refrigerant flows back to the air inlet through the bypass flow path 10d. When the fourth on-off valve 64 disconnects the bypass flow path 10d, the refrigerant returns to the air inlet through a flow path where the evaporator 120 is located.

In some embodiments of the present disclosure, the thermal management system 100 further includes an in-vehicle condenser 15. The exhaust port of the compressor 11 is connected to a first end of the in-vehicle condenser 15, and a second end of the in-vehicle condenser 15 is connected to the second port of the first heat exchanger 12.

In the refrigerant loop formed by the compressor 11, the in-vehicle condenser 15 and the first heat exchanger 12 together, the high-temperature and high-pressure gaseous refrigerant flowing out of the exhaust port of the compressor 11 exchanges heat at the in-vehicle condenser 15, so that the refrigerant releases heat and is liquefied, then the refrigerant absorbs heat and is vaporized at the first heat exchanger 12, and is throttled and depressurized to finally become a low-temperature and low-pressure gaseous refrigerant, which flows in from the air inlet of the compressor 11.

It can be understood that the in-vehicle condenser 15, the heat exchange assembly 2 and the out-of-vehicle condenser 130 are all connected to the exhaust port of the compressor 11. According to the present disclosure, with the arrangement of the control valve group a flow direction of the refrigerant can be controlled to control the operation of the thermal management system 100. The first end of the in-vehicle condenser 15 is connected to the control valve group, and the control valve group operates to allow the refrigerant at the exhaust port to flow to at least one of the in-vehicle condenser 15, the second throttle valve group and the out-of-vehicle condenser 130.

The second end of the in-vehicle condenser 15 is connected to the first heat exchanger 12 through a fourth control valve. In an embodiment of the present disclosure, the fourth control valve is a fourth electronic expansion valve 66, and the electronic expansion valve has on-off and flow adjustment functions. The fourth electronic expansion valve 66 can throttle and depressurize the refrigerant flowing therethrough. The electronic expansion valve can further selectively seal a pipeline to control the flow or stagnation of the refrigerant in the pipeline where the electronic expansion valve is located. The fourth electronic expansion valve 66 can control flow or interruption of a refrigerant in a pipeline where the in-vehicle condenser 15 is located.

It can be understood that refrigerants can flow in multiple refrigerant loops at the same time, and the multiple refrigerant loops may be in communication with each other or even have an overlapping portion with each other. Therefore, the thermal management system 100 according to the present disclosure is further provided with multiple valves to prevent the refrigerants flowing in the multiple different refrigerant loops from interfering with each other, which otherwise reduces operating efficiency of the thermal management system 100.

In some embodiments of the present disclosure, the thermal management system 100 further includes a first switch valve, and the first switch valve is arranged between the heat exchange assembly 2 and a third heat exchanger 81. The first switch valve can control a refrigerant to flow from the heat exchange assembly 2 to the third heat exchanger 81, to improve fluidity of the refrigerant and operating stability of the thermal management system 100.

In an embodiment of the present disclosure, the first switch valve is configured as a first check valve 71. One end of the first check valve 71 is connected at an end of the second valve group 4 away from the heat exchange assembly 2, and the other end of the first check valve 71 is connected to the third heat exchanger 81. The first check valve 71 is configured such that the refrigerant flows from the heat exchange assembly 2 to the third heat exchanger 81.

When a refrigerant flows in a refrigerant loop formed by the compressor 11, the evaporator 120 and the out-of-vehicle condenser 130 together, and at the same time, a refrigerant flows in a refrigerant loop formed by the compressor 11, the evaporator 120 and the heat exchange assembly 2 together, the refrigerant flowing out of the out-of-vehicle condenser 130 and the refrigerant flowing out of the heat exchange assembly 2 after heating the battery module are collected, and then are subjected to throttling and evaporation and other treatment to flow back to the compressor 11. With the arrangement of the first check valve 71, the refrigerant flowing out of the out-of-vehicle condenser 130 can be prevented from flowing to the heat exchange assembly 2, which can improve flow stability of the refrigerant.

Similarly, a fourth check valve 74 is further arranged at the second end of the out-of-vehicle condenser 130. The fourth check valve 74 is configured such that the refrigerant flows out from the second end of the out-of-vehicle condenser 130, but the refrigerant cannot flow in from the second end of the out-of-vehicle condenser 130. When a refrigerant flows in a refrigerant loop formed by the compressor 11, the out-of-vehicle condenser 130 and the evaporator 120 together, and at the same time, a refrigerant flows in a refrigerant loop formed by the compressor 11, the evaporator 120 and the heat exchange assembly 2 together, the refrigerant flowing out of the out-of-vehicle condenser 130 and the refrigerant flowing out of the heat exchange assembly 2 after heating the battery module are collected, and then are subjected to throttling and evaporation and other treatment to flow back to the compressor 11. With the arrangement of the first check valve 71, the refrigerant flowing out of the heat exchange assembly 2 can be prevented from flowing to the out-of-vehicle condenser 130, which can improve fluidity of the refrigerant.

In some embodiments of the present disclosure, the thermal management system 100 further includes a second switch valve, and the second switch valve is arranged between the heat exchange assembly 2 and a second port of the second heat exchanger 13. The second switch valve can control a refrigerant to flow from the second heat exchanger 13 to the heat exchange assembly 2, to improve fluidity of the refrigerant and operating stability of the thermal management system 100.

In an embodiment of the present disclosure, the second switch valve is configured as a second check valve 72. One end of the second check valve 72 is connected at an end of the second valve group 4 away from the heat exchange assembly 2, and the other end of the second check valve 72 is connected to connection ends of the first heat exchanger 12 and a second heat exchanger 13. The second check valve 72 is configured such that the refrigerant flows from the second heat exchanger 13 to the heat exchange assembly 2.

When a refrigerant flows in a refrigerant loop formed by the compressor 11, the heat exchange assembly 2 and the out-of-vehicle condenser 130 together, the second check valve 72 can control the refrigerant to flow from the second heat exchanger 13 to the heat exchange assembly 2.

It can be understood that functions of the first check valve 71 and the second check valve 72 are complementary. If only the first check valve 71 is provided, the refrigerant cannot flow to the heat exchange assembly 2 through the out-of-vehicle condenser 130. If only the second check valve 72 is provided, the refrigerant loop formed by the compressor 11, the evaporator 120 and the heat exchange assembly 2 together cannot be closed. Therefore, the first check valve 71 and the second check valve 72 are provided at the same time, so that the refrigerant can flow in an orderly manner and the operating stability of the thermal management system 100 can be improved.

In some other embodiments of the present disclosure, a bidirectional valve is arranged between the heat exchange assembly 2 and the connection ends of the second heat exchanger 13 and the first heat exchanger 12, which can control the flow of the refrigerant from the first heat exchanger 12 to the heat exchange assembly 2 and also control the flow of the refrigerant from the heat exchange assembly 2 to the first heat exchanger 12.

In some embodiments of the present disclosure, the thermal management system 100 further includes a third switch valve, and the third switch valve is arranged between the heat exchange assembly 2 and the air inlet of the compressor 11.

It can be understood that heat exchange assembly 2, the evaporator 120, and out-of-vehicle condenser 130 are all in communication with the air inlet of compressor 11. The third switch valve is arranged between heat exchange assembly 2 and the air inlet of the compressor 11, so that the refrigerant flowing to the air inlet can be prevented from flowing to the heat exchange assembly 2, which otherwise damages the heat exchange assembly 2.

In an embodiment of the present disclosure, the third switch valve is configured as a third check valve 73, and the third check valve 73 is arranged between the heat exchange assembly 2 and the air inlet of the compressor 11. The third check valve 73 is configured such that a refrigerant flows from the heat exchange assembly 2 to the air inlet of the compressor 11, so as to prevent the refrigerant flowing to the air inlet from flowing to the heat exchange assembly 2 and improve use safety of the heat exchange assembly 2.

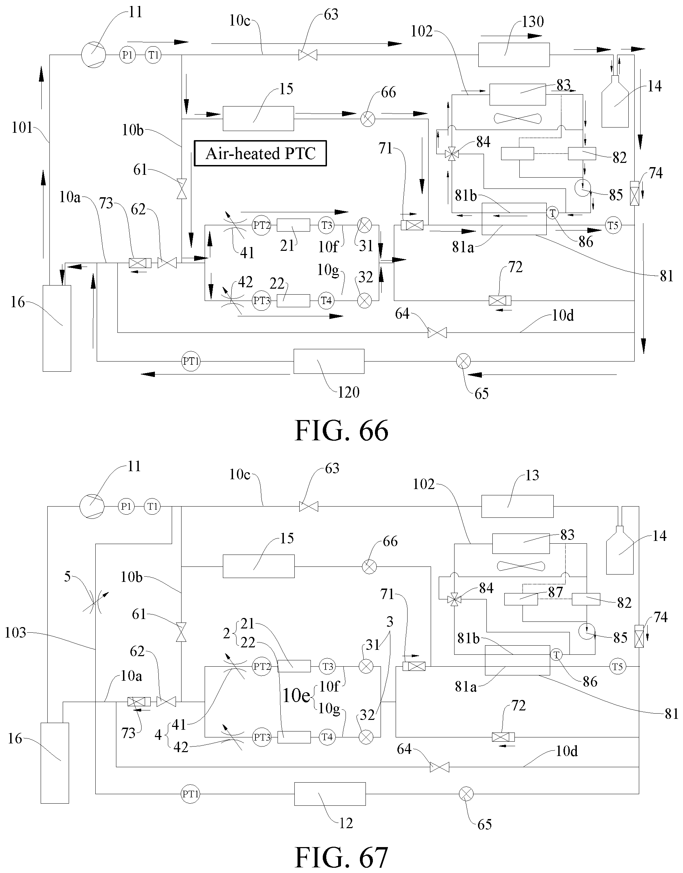

In some embodiments of the present disclosure, as shown in FIG. 67, the thermal management system 100 further includes a minor circulation loop 103, and two ends of the minor circulation loop 103 are connected to the air inlet and the exhaust port respectively. The thermal management system 100 includes a third valve group 5, and the third valve group 5 is configured to open or close the minor circulation loop 103 and throttle and depressurize a refrigerant.

It can be understood that the compressor pressurizes and does work on the refrigerant to increase the temperature of the refrigerant, and the refrigerant can release heat in the refrigerant loop. When the thermal management system 100 has a great demand for heat released by the refrigerant, the refrigerant can circularly flow in the minor circulation loop, and the compressor 11 pressurizes and does work on the refrigerant to increase the temperature of the refrigerant, so that the refrigerant can release a large amount of heat to improve the heating capacity of the thermal management system 100.

In some embodiments of the present disclosure, as shown in FIG. 2, the thermal management system 100 further includes: a high-pressure thermal management subsystem 1001. The high-pressure thermal management subsystem 1001 includes a third heat exchanger 81 and a circulation loop 102. The third heat exchanger 81 has a first flow channel 81a and a second flow channel 81b. A first port of the first flow channel 81a is connected to the heat exchange assembly 2 and the second end of the in-vehicle condenser 15, and a second port of the first flow channel 81a is connected to the second port of the first heat exchanger 12. The second flow channel 81b is arranged on the circulation loop 102, and the circulation loop 102 is configured to exchange heat with the high-pressure thermal management subsystem 1001.

The first flow channel 81a is connected in series to the refrigerant circulation loop 101, and the second flow channel 81b is connected in series to the circulation loop 102. The first flow channel 81a and the second flow channel 81b are located together in the third heat exchanger 81, and the first flow channel 81a and the second flow channel 81b can exchange heat with each other.

When a temperature of a coolant flowing in the second flow channel 81b is greater than that of a refrigerant flowing in the first flow channel 81a, the refrigerant flows through the third heat exchanger 81 to absorb heat; or when the temperature of the coolant flowing in the second flow channel 81b is less than that of the refrigerant flowing in the first flow channel 81a, the refrigerant flows through the third heat exchanger 81 to release heat.

In some embodiments of the present disclosure, the high-pressure thermal management subsystem 1001 further includes: a first radiator 82 and a second radiator 83. The first radiator 82 exchanges heat with an electronic motor control of the vehicle, and the first radiator 82 is connected between the circulation loop 102 and the second radiator 83. The second radiator 83 is suitable for exchanging heat with an environment outside the vehicle.

The coolant flows in the circulation loop 102, and may flow into the second flow channel 81b after heat exchange with the first radiator 82, to exchange heat with the refrigerant, so that the refrigerant is heated by heat generated by the electronic motor control of the vehicle, or the refrigerant is cooled, and the electronic motor control is heated by the heat of the refrigerant.

The first port of the first flow channel 81a is selectively connected to at least one of the heat exchange assembly 2 and the second end of the in-vehicle condenser 15, and the second port of the first flow channel 81a is selectively connected to at least one of the second end of the out-of-vehicle condenser 130 and the second end of the evaporator 120. The refrigerant can also exchange heat when flowing through the third heat exchanger 81, so that the third heat exchanger 81 can also form a refrigerant loop together with other elements.

With reference to FIG. 3 to FIG. 18, several embodiments of the thermal management system 100 operating under different working conditions are briefly described below.

Embodiment 1 is only under a working condition of heating the passenger compartment.

As shown in FIG. 3, a refrigerant flows in a first refrigerant loop formed by the compressor 11, the in-vehicle condenser 15 and the third heat exchanger 81 only under a working condition of heating the passenger compartment. In this case, the first on-off valve 61 disconnects the second exhaust flow channel 10b, the second on-off valve 62 disconnects the first exhaust flow channel 10a, the third on-off valve 63 disconnects the third exhaust flow channel 10c, and the fourth on-off valve 64 connects the bypass flow path 10d. The first electronic expansion valve 31 and the second electronic expansion valve 32 disconnect a pipeline, the third electronic expansion valve 65 disconnects a pipeline, and the fourth electronic expansion valve 66 connects a pipeline, to implement a throttling function.

The high-temperature and high-pressure gaseous refrigerant flows out from the exhaust port of the compressor 11 and flows to the in-vehicle condenser 15 through the second exhaust flow channel 10b, and the refrigerant is liquefied and releases heat at the in-vehicle condenser 15. Then the refrigerant is throttled and depressurized by the fourth electronic expansion valve 66 and then flows to the third heat exchanger 81. The refrigerant absorbs heat and is vaporized at the third heat exchanger 81 to finally become a low-temperature and low-pressure gaseous refrigerant, which flows in from the air inlet of the compressor 11 along the bypass flow path 10d, so that the in-vehicle condenser 15 heats the passenger compartment.

Embodiment 2 is only under a working condition of heating the battery module.

As shown in FIG. 4, a refrigerant flows in a second refrigerant loop formed by the compressor 11, the heat exchange assembly 2 and the third heat exchanger 81 only under a working condition of heating the battery module. In this case, the first on-off valve 61 connects the second exhaust flow channel 10b, the second on-off valve 62 disconnects the first exhaust flow channel 10a, the third on-off valve 63 disconnects the third exhaust flow channel 10c, and the fourth on-off valve 64 connects the bypass flow path 10d. The first electronic expansion valve 31 and the second electronic expansion valve 32 connect a pipeline to implement a throttling function. The third electronic expansion valve 65 disconnects a pipeline, and the fourth electronic expansion valve 66 disconnects a pipeline.

The high-temperature and high-pressure gaseous refrigerant flows out from the exhaust port of the compressor 11 and flows to the heat exchange assembly 2 through the second exhaust flow channel 10b. After being first depressurized by the first throttling element 41 and the second throttling element 42, the refrigerant is liquefied and releases heat at the first heat exchange plate 21 and the second heat exchange plate 22. Then the refrigerant is throttled and depressurized by the third electronic expansion valve 65 and the fourth expansion valve and then flows to the third heat exchanger 81. The refrigerant absorbs heat and is vaporized at the third heat exchanger 81 to finally become a low-temperature and low-pressure gaseous refrigerant, which flows in from the air inlet of the compressor 11 along the bypass flow path 10d, so that the first heat exchange plate 21 and the second heat exchange plate 22 heat the battery module.

Embodiment 3 is under working conditions of heating the passenger compartment and the battery module. Embodiment 3 is actually implemented by the simultaneous operation of Embodiment 1 and Embodiment 2.

As shown in FIG. 5, under the working conditions of heating the passenger compartment and the battery module, a refrigerant flows in the first refrigerant loop formed by the compressor 11, the in-vehicle condenser 15 and the third heat exchanger 81, while a refrigerant flows in the second refrigerant loop formed by the compressor 11, the heat exchange assembly 2 and the third heat exchanger 81. In this case, the first on-off valve 61 connects the second exhaust flow channel 10b, the second on-off valve 62 disconnects the first exhaust flow channel 10a, the third on-off valve 63 disconnects the third exhaust flow channel 10c, and the fourth on-off valve 64 connects the bypass flow path 10d. The first electronic expansion valve 31 and the second electronic expansion valve 32 connect a pipeline to implement a throttling function. The third electronic expansion valve 65 disconnects a pipeline, and the fourth electronic expansion valve 66 connects a pipeline, to implement a throttling function.

The high-temperature and high-pressure gaseous refrigerant flows out from the exhaust port of the compressor 11 and flows to the in-vehicle condenser 15 and the heat exchange assembly 2 through the second exhaust flow channel 10b, and the refrigerant flowing to the in-vehicle condenser 15 is liquefied and releases heat at the in-vehicle condenser 15. Then the refrigerant is throttled and depressurized by the fourth electronic expansion valve 66 and then flows to the third heat exchanger 81. After the refrigerant flowing to the heat exchange assembly 2 is first depressurized by the first throttling element 41 and the second throttling element 42, the refrigerant is liquefied and releases heat at the first heat exchange plate 21 and the second heat exchange plate 22. Then the refrigerant is throttled and depressurized by the third electronic expansion valve 65 and the fourth expansion valve and then flows to the third heat exchanger 81. The refrigerant absorbs heat and is vaporized at the third heat exchanger 81 to finally become a low-temperature and low-pressure gaseous refrigerant, which flows in from the air inlet of the compressor 11 along the bypass flow path 10d, so that the in-vehicle condenser 15 heats the passenger compartment, and the first heat exchange plate 21 and the second heat exchange plate 22 heat the battery module.

Embodiment 4 is only under a working condition of refrigerating the passenger compartment.

As shown in FIG. 6, a refrigerant flows in a third refrigerant loop formed by the compressor 11, the out-of-vehicle condenser 130 and the evaporator 120 only under a working condition of refrigerating the passenger compartment. In this case, the first on-off valve 61 disconnects the second exhaust flow channel 10b, the second on-off valve 62 disconnects the first exhaust flow channel 10a, the third on-off valve 63 connects the third exhaust flow channel 10c, and the fourth on-off valve 64 disconnects the bypass flow path 10d. The first electronic expansion valve 31 and the second electronic expansion valve 32 disconnect a pipeline, and the third electronic expansion valve 65 connects a pipeline to implement a throttling function. The fourth electronic expansion valve 66 disconnects a pipeline.

The high-temperature and high-pressure gaseous refrigerant flows out from the exhaust port of the compressor 11 and flows to the out-of-vehicle condenser 130 through the third exhaust flow channel 10c, and the refrigerant is liquefied and releases heat at the out-of-vehicle condenser 130. Then the refrigerant is throttled and depressurized by the third electronic expansion valve 65 and then flows to the evaporator 120. The refrigerant absorbs heat and is vaporized at the evaporator 120 to finally become a low-temperature and low-pressure gaseous refrigerant, which flows in from the air inlet of the compressor 11, so that the evaporator 120 refrigerates the passenger compartment.

Embodiment 5 is only under a working condition of cooling the battery module.

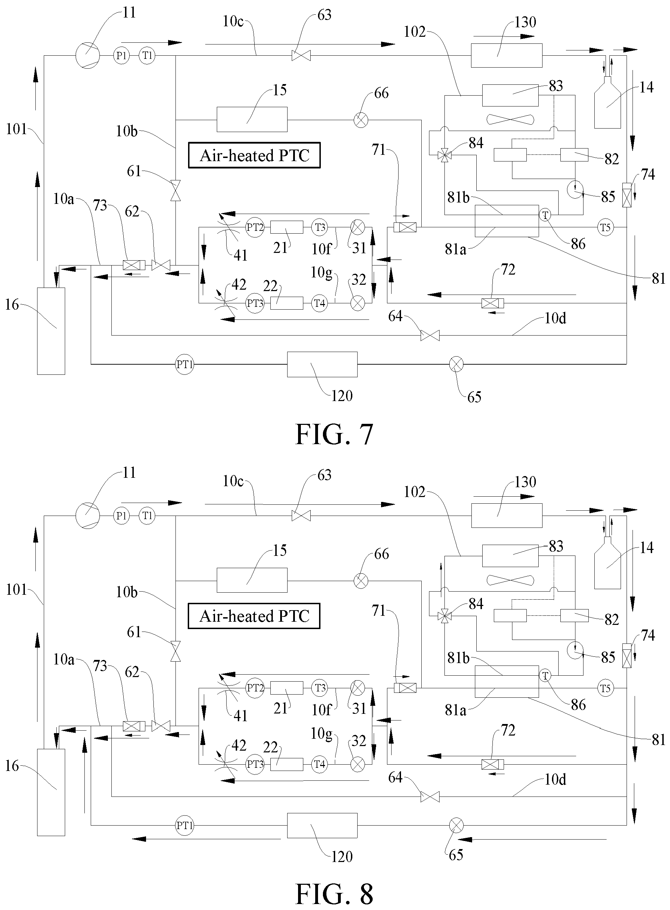

As shown in FIG. 7, a refrigerant flows in a fourth refrigerant loop formed by the compressor 11, the out-of-vehicle condenser 130 and the heat exchange assembly 2 only under a working condition of cooling the battery module. In this case, the first on-off valve 61 disconnects the second exhaust flow channel 10b, the second on-off valve 62 connects the first exhaust flow channel 10a, the third on-off valve 63 connects the third exhaust flow channel 10c, and the fourth on-off valve 64 disconnects the bypass flow path 10d. The first electronic expansion valve 31 and the second electronic expansion valve 32 connect a pipeline to implement a throttling function. The third electronic expansion valve 65 disconnects a pipeline, and the fourth electronic expansion valve 66 disconnects a pipeline.

The high-temperature and high-pressure gaseous refrigerant flows out from the exhaust port of the compressor 11 and flows to the out-of-vehicle condenser 130 through the third exhaust flow channel 10c. The refrigerant is liquefied and releases heat at the out-of-vehicle condenser 130, and then the refrigerant is throttled and depressurized by the first electronic expansion valve 31 and the second electronic expansion valve 32 and then flows to the first heat exchange plate 21 and the second heat exchange plate 22. The refrigerant absorbs heat and is vaporized at the first heat exchange plate 21 and the second heat exchange plate 22, and is throttled and depressurized by the first throttling element 41 and the second throttling element 42 to finally become a low-temperature and low-pressure gaseous refrigerant, which flows in from the air inlet of the compressor 11, so that the first heat exchange plate 21 and the second heat exchange plate 22 refrigerate the battery module.

Embodiment 6 is under working conditions of refrigerating the passenger compartment and cooling the battery module. Embodiment 6 is actually implemented by the simultaneous operation of Embodiment 4 and Embodiment 5.

As shown in FIG. 8, under the working conditions of refrigerating the passenger compartment and cooling the battery module, a refrigerant flows in the third refrigerant loop formed by the compressor 11, the out-of-vehicle condenser 130 and the evaporator 120, while a refrigerant further flows in the fourth refrigerant loop formed by the compressor 11, the out-of-vehicle condenser 130 and the heat exchange assembly 2. In this case, the first on-off valve 61 disconnects the second exhaust flow channel 10b, the second on-off valve 62 connects the first exhaust flow channel 10a, the third on-off valve 63 connects the third exhaust flow channel 10c, and the fourth on-off valve 64 disconnects the bypass flow path 10d. The first electronic expansion valve 31 and the second electronic expansion valve 32 connect a pipeline to implement a throttling function. The third electronic expansion valve 65 connects a pipeline to implement a throttling function, and the fourth electronic expansion valve 66 disconnects a pipeline.

The high-temperature and high-pressure gaseous refrigerant flows out from the exhaust port of the compressor 11 and flows to the out-of-vehicle condenser 130 through the third exhaust flow channel 10c, and the refrigerant is liquefied and releases heat at the out-of-vehicle condenser 130. Then the refrigerant is throttled and depressurized by the third electronic expansion valve 65 and then partially flows to the evaporator 120, and partially flows to the heat exchange assembly 2. The refrigerant flowing to the evaporator 120 absorbs heat and is vaporized at the evaporator 120 to finally become a low-temperature and low-pressure gaseous refrigerant. The refrigerant flowing to the heat exchange assembly 2 is first throttled and depressurized by the first electronic expansion valve 31 and the second electronic expansion valve 32, then absorbs heat and is vaporized at the first heat exchange plate 21 and the second heat exchange plate 22, and is throttled and depressurized by the first throttling element 41 and the second throttling element 42 to finally become a low-temperature and low-pressure gaseous refrigerant. The refrigerant flowing out of the evaporator 120 and the refrigerant flowing out of the first throttling element 41 and the second throttling element 42 are mixed and then flow in from the air inlet of the compressor 11 together. Therefore, the evaporator 120 refrigerates the passenger compartment, and the first heat exchange plate 21 and the second heat exchange plate 22 refrigerate the battery module.

Embodiment 7 is under working conditions of refrigerating the passenger compartment and heating the battery module. Embodiment 7 is actually implemented by the simultaneous operation of Embodiment 4 and Embodiment 2.

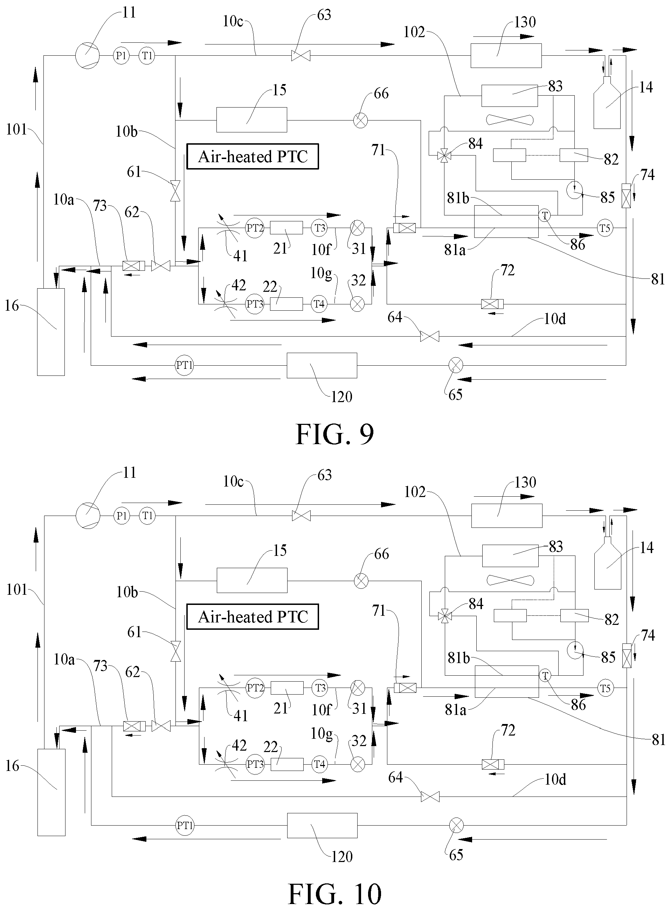

As shown in FIG. 9, under the working conditions of refrigerating the passenger compartment and heating the battery module, a refrigerant flows in the third refrigerant loop formed by the compressor 11, the out-of-vehicle condenser 130 and the evaporator 120, while a refrigerant further flows in the second refrigerant loop formed by the compressor 11, the heat exchange assembly 2 and the third heat exchanger 81. In this case, the first on-off valve 61 connects the second exhaust flow channel 10b, the second on-off valve 62 disconnects the first exhaust flow channel 10a, the third on-off valve 63 connects the third exhaust flow channel 10c, and the fourth on-off valve 64 connects the bypass flow path 10d. The first electronic expansion valve 31 and the second electronic expansion valve 32 connect a pipeline to implement a throttling function. The third electronic expansion valve 65 connects a pipeline to implement a throttling function, and the fourth electronic expansion valve 66 disconnects a pipeline.

The high-temperature and high-pressure gaseous refrigerant flows out from the exhaust port of the compressor 11 and partially flows to the out-of-vehicle condenser 130 through the third exhaust flow channel 10c, and the refrigerant is liquefied and releases heat at the out-of-vehicle condenser 130. Then the refrigerant flows to the evaporator 120. The other part of the refrigerant flows to the heat exchange assembly 2 through the second exhaust flow channel 10b. After being first depressurized by the first throttling element 41 and the second throttling element 42, the refrigerant is liquefied and releases heat at the first heat exchange plate 21 and the second heat exchange plate 22. Then the refrigerant is throttled and depressurized by the third electronic expansion valve 65 and the fourth expansion valve and then flows to the third heat exchanger 81, and the refrigerant absorbs heat and is vaporized at the third heat exchanger 81. The refrigerant flowing out of the out-of-vehicle condenser 130 and the refrigerant flowing out of the third heat exchanger 81 are mixed into a gas-liquid mixed state. The low-temperature and low-pressure gaseous refrigerant flows in from the air inlet of the compressor 11 along the bypass flow path 10d, and the liquid refrigerant is throttled and depressurized by the third electronic expansion valve 65 and then flows to the evaporator 120. The refrigerant absorbs heat and is vaporized at the evaporator 120 to finally become a low-temperature and low-pressure gaseous refrigerant, which flows in from the air inlet of the compressor 11. Therefore, the evaporator 120 refrigerates the passenger compartment, and the first heat exchange plate 21 and the second heat exchange plate 22 heat the battery module.

Embodiment 8 is under working conditions of refrigerating the passenger compartment and heating the battery module. In Embodiment 8, a ratio of a passenger compartment refrigeration demand to a battery module heating demand is different from that in Embodiment 7, so the refrigerant may not pass through the bypass flow path 10d. Embodiment 8 differs from Embodiment 7 in that the fourth on-off valve 64 disconnects the bypass flow path 10d.

As shown in FIG. 10, under the working conditions of refrigerating the passenger compartment and heating the battery module, a refrigerant flows in the third refrigerant loop formed by the compressor 11, the out-of-vehicle condenser 130 and the evaporator 120, while a refrigerant further flows in a fifth refrigerant loop formed by the compressor 11, the heat exchange assembly 2, the third heat exchanger 81 and the evaporator 120. In this case, the first on-off valve 61 connects the second exhaust flow channel 10b, the second on-off valve 62 disconnects the first exhaust flow channel 10a, the third on-off valve 63 connects the third exhaust flow channel 10c, and the fourth on-off valve 64 disconnects the bypass flow path 10d. The first electronic expansion valve 31 and the second electronic expansion valve 32 connect a pipeline to implement a throttling function. The third electronic expansion valve 65 connects a pipeline to implement a throttling function, and the fourth electronic expansion valve 66 disconnects a pipeline.

The high-temperature and high-pressure gaseous refrigerant flows out from the exhaust port of the compressor 11 and partially flows to the out-of-vehicle condenser 130 through the third exhaust flow channel 10c, and the refrigerant is liquefied and releases heat at the out-of-vehicle condenser 130. Then the refrigerant flows to the evaporator 120. The other part of the refrigerant flows to the heat exchange assembly 2 through the second exhaust flow channel 10b. After being first depressurized by the first throttling element 41 and the second throttling element 42, the refrigerant is liquefied and releases heat at the first heat exchange plate 21 and the second heat exchange plate 22. Then the refrigerant is throttled and depressurized by the third electronic expansion valve 65 and the fourth expansion valve and then flows to the third heat exchanger 81, and the refrigerant absorbs heat and is vaporized at the third heat exchanger 81. The refrigerant also flows to the evaporator 120. The refrigerant flowing out of the out-of-vehicle condenser 130 and the refrigerant flowing out of the third heat exchanger 81 are mixed into a gas-liquid mixed state. The gas-liquid mixed refrigerant absorbs heat and is vaporized at the evaporator 120 to finally become a low-temperature and low-pressure gaseous refrigerant, which flows in from the air inlet of the compressor 11. Therefore, the evaporator 120 refrigerates the passenger compartment, and the first heat exchange plate 21 and the second heat exchange plate 22 heat the battery module.

Embodiment 9 is under working conditions of heating the passenger compartment and cooling the battery module. Embodiment 9 is actually implemented by the simultaneous operation of Embodiment 1 and Embodiment 5.

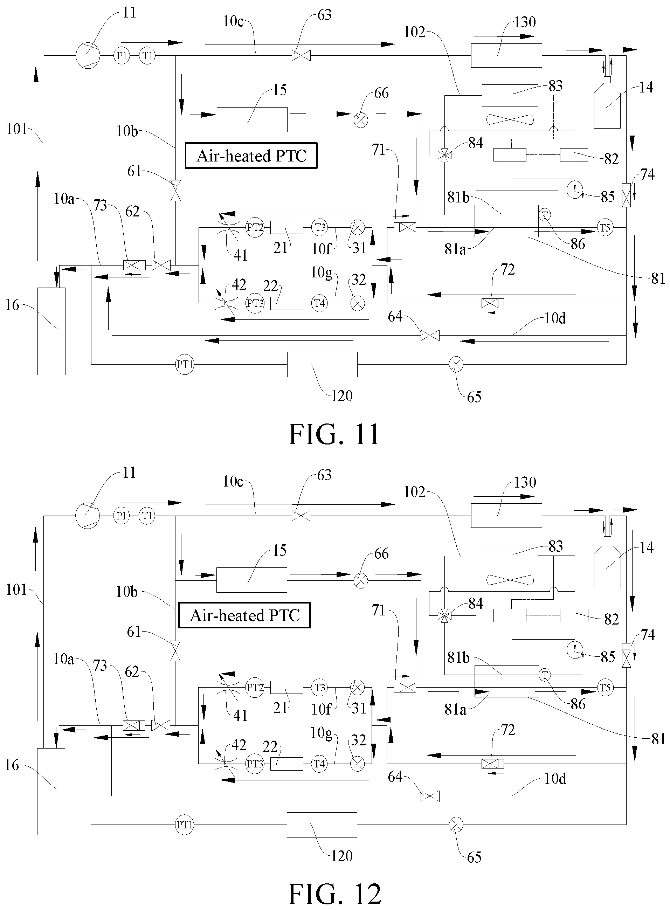

As shown in FIG. 11, under the working conditions of heating the passenger compartment and cooling the battery module, a refrigerant flows in the first refrigerant loop formed by the compressor 11, the in-vehicle condenser 15 and the third heat exchanger 81, while a refrigerant flows in the fourth refrigerant loop formed by the compressor 11, the out-of-vehicle condenser 130 and the heat exchange assembly 2. In this case, the first on-off valve 61 disconnects the second exhaust flow channel 10b, the second on-off valve 62 connects the first exhaust flow channel 10a, the third on-off valve 63 connects the third exhaust flow channel 10c, and the fourth on-off valve 64 connects the bypass flow path 10d. The first electronic expansion valve 31 and the second electronic expansion valve 32 connect a pipeline to implement a throttling function. The third electronic expansion valve 65 disconnects a pipeline, and the fourth electronic expansion valve 66 connects a pipeline, to implement a throttling function.

The high-temperature and high-pressure gaseous refrigerant flows out from the exhaust port of the compressor 11 and partially flows to the in-vehicle condenser 15 through the second exhaust flow channel 10b, and the refrigerant is liquefied and releases heat at the in-vehicle condenser 15. Then the refrigerant is throttled and depressurized by the fourth electronic expansion valve 66 and then flows to the third heat exchanger 81, and the refrigerant absorbs heat and is vaporized at the third heat exchanger 81 and then flows out. The other part of the refrigerant flows to the out-of-vehicle condenser 130 through the third exhaust flow channel 10c, and the refrigerant is liquefied and releases heat at the out-of-vehicle condenser 130 and then flows out. The refrigerant flowing out of the third heat exchanger 81 and the refrigerant flowing out of the out-of-vehicle condenser 130 are mixed into a gas-liquid mixed state. The gaseous refrigerant flows in from the air inlet of the compressor 11 along the bypass flow path 10d, and the liquid refrigerant is throttled and depressurized by the first electronic expansion valve 31 and the second electronic expansion valve 32 and then flows to the first heat exchange plate 21 and the second heat exchange plate 22. The refrigerant absorbs heat and is vaporized at the first heat exchange plate 21 and the second heat exchange plate 22, and is throttled and depressurized by the first throttling element 41 and the second throttling element 42 to finally become a low-temperature and low-pressure gaseous refrigerant, which flows in from the air inlet of the compressor 11. Therefore, the in-vehicle condenser 15 heats the passenger compartment, and the first heat exchange plate 21 and the second heat exchange plate 22 refrigerate the battery module.

Embodiment 10 is under working conditions of heating the passenger compartment and cooling the battery module. In Embodiment 10, a ratio of a passenger compartment refrigeration demand to a battery module heating demand is different from that in Embodiment 9, so the refrigerant may not pass through the bypass flow path 10d. Embodiment 10 differs from Embodiment 9 in that the fourth on-off valve 64 disconnects the bypass flow path 10d.

As shown in FIG. 12, under the working conditions of heating the passenger compartment and cooling the battery module, a refrigerant flows in a sixth refrigerant loop formed by the compressor 11, the in-vehicle condenser 15, the third heat exchanger 81 and the heat exchange assembly 2, while a refrigerant flows in the fourth refrigerant loop formed by the compressor 11, the out-of-vehicle condenser 130 and the heat exchange assembly 2. In this case, the first on-off valve 61 disconnects the second exhaust flow channel 10b, the second on-off valve 62 connects the first exhaust flow channel 10a, the third on-off valve 63 connects the third exhaust flow channel 10c, and the fourth on-off valve 64 disconnects the bypass flow path 10d. The first electronic expansion valve 31 and the second electronic expansion valve 32 connect a pipeline to implement a throttling function. The third electronic expansion valve 65 disconnects a pipeline, and the fourth electronic expansion valve 66 connects a pipeline, to implement a throttling function.

The high-temperature and high-pressure gaseous refrigerant flows out from the exhaust port of the compressor 11 and partially flows to the in-vehicle condenser 15 through the second exhaust flow channel 10b, and the refrigerant is liquefied and releases heat at the in-vehicle condenser 15. Then the refrigerant is throttled and depressurized by the fourth electronic expansion valve 66 and then flows to the third heat exchanger 81, and the refrigerant absorbs heat and is vaporized at the third heat exchanger 81 and then flows out. The other part of the refrigerant flows to the out-of-vehicle condenser 130 through the third exhaust flow channel 10c, and the refrigerant is liquefied and releases heat at the out-of-vehicle condenser 130 and then flows out. The refrigerant flowing out of the third heat exchanger 81 and the refrigerant flowing out of the out-of-vehicle condenser 130 are mixed into a gas-liquid mixed state. The gas-liquid mixed refrigerant is throttled and depressurized by the first electronic expansion valve 31 and the second electronic expansion valve 32 and then flows to the first heat exchange plate 21 and the second heat exchange plate 22. The refrigerant absorbs heat and is vaporized at the first heat exchange plate 21 and the second heat exchange plate 22, and is throttled and depressurized by the first throttling element 41 and the second throttling element 42 to finally become a low-temperature and low-pressure gaseous refrigerant, which flows in from the air inlet of the compressor 11. Therefore, the in-vehicle condenser 15 heats the passenger compartment, and the first heat exchange plate 21 and the second heat exchange plate 22 refrigerate the battery module.

Embodiment 11 is under working conditions of heating and dehumidifying the passenger compartment.

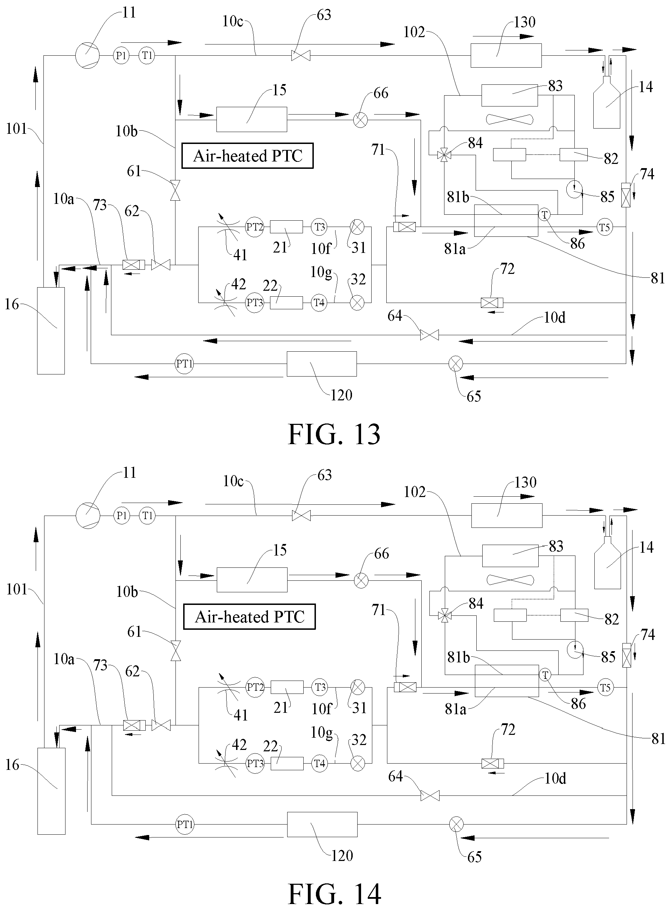

As shown in FIG. 13, under the working conditions of heating and dehumidifying the passenger compartment, a refrigerant flows in the first refrigerant loop formed by the compressor 11, the in-vehicle condenser 15 and the third heat exchanger 81, while a refrigerant flows in the third refrigerant loop formed by the compressor 11, the out-of-vehicle condenser 130 and the evaporator 120. In this case, the first on-off valve 61 disconnects the second exhaust flow channel 10b, the second on-off valve 62 disconnects the first exhaust flow channel 10a, the third on-off valve 63 connects the third exhaust flow channel 10c, and the fourth on-off valve 64 connects the bypass flow path 10d. The first electronic expansion valve 31 and the second electronic expansion valve 32 disconnect a pipeline, and the third electronic expansion valve 65 connects a pipeline to implement a throttling function. The fourth electronic expansion valve 66 connects a pipeline to implement a throttling function.

The high-temperature and high-pressure gaseous refrigerant flows out from the exhaust port of the compressor 11 and partially flows to the in-vehicle condenser 15 through the second exhaust flow channel 10b, and the refrigerant is liquefied and releases heat at the in-vehicle condenser 15. Then the refrigerant is throttled and depressurized by the fourth electronic expansion valve 66 and then flows to the third heat exchanger 81, and the refrigerant absorbs heat and is vaporized at the third heat exchanger 81 and flows out from the third heat exchanger 81. The other part of the refrigerant flows to the out-of-vehicle condenser 130 through the third exhaust flow channel 10c, and the refrigerant is liquefied and releases heat at the out-of-vehicle condenser 130 and flows out from the out-of-vehicle condenser 130. The refrigerant flowing out of the third heat exchanger 81 and the refrigerant flowing out of the condenser 130 are mixed into a gas-liquid mixed state. The gaseous refrigerant flows in from the air inlet of the compressor 11 along the bypass flow path 10d, and the liquid refrigerant is throttled and depressurized by the third electronic expansion valve 65 and then flows to the evaporator 120. The refrigerant absorbs heat and is vaporized at the evaporator 120 to finally become a low-temperature and low-pressure gaseous refrigerant, which flows in from the air inlet of the compressor 11. Therefore, the in-vehicle condenser 15 heats the passenger compartment, and the evaporator 120 refrigerates the passenger compartment, so that moisture in the passenger compartment is liquefied when encountering cold, thereby dehumidifying the passenger compartment.

Embodiment 12 is under working conditions of heating and dehumidifying the passenger compartment. In Embodiment 12, a ratio of a passenger compartment heating demand to a passenger compartment dehumidification demand is different from that in Embodiment 11, so the refrigerant may not pass through the bypass flow path 10d. Embodiment 12 differs from Embodiment 11 in that the fourth on-off valve 64 disconnects the bypass flow path 10d.

As shown in FIG. 14, under the working conditions of heating and dehumidifying the passenger compartment, a refrigerant flows in a seventh refrigerant loop formed by the compressor 11, the in-vehicle condenser 15, the third heat exchanger 81 and the evaporator 120, while a refrigerant flows in the third refrigerant loop formed by the compressor 11, the out-of-vehicle condenser 130 and the evaporator 120. In this case, the first on-off valve 61 disconnects the second exhaust flow channel 10b, the second on-off valve 62 disconnects the first exhaust flow channel 10a, the third on-off valve 63 disconnects the third exhaust flow channel 10c, and the fourth on-off valve 64 connects the bypass flow path 10d. The first electronic expansion valve 31 and the second electronic expansion valve 32 disconnect a pipeline, and the third electronic expansion valve 65 connects a pipeline to implement a throttling function. The fourth electronic expansion valve 66 connects a pipeline to implement a throttling function.

The high-temperature and high-pressure gaseous refrigerant flows out from the exhaust port of the compressor 11 and partially flows to the in-vehicle condenser 15 through the second exhaust flow channel 10b, and the refrigerant is liquefied and releases heat at the in-vehicle condenser 15. Then the refrigerant is throttled and depressurized by the fourth electronic expansion valve 66 and then flows to the third heat exchanger 81, and the refrigerant absorbs heat and is vaporized at the third heat exchanger 81 and flows out from the third heat exchanger 81. The other part of the refrigerant flows to the out-of-vehicle condenser 130 through the third exhaust flow channel 10c, and the refrigerant is liquefied and releases heat at the out-of-vehicle condenser 130 and flows out from the out-of-vehicle condenser 130. The refrigerant flowing out of the third heat exchanger 81 and the refrigerant flowing out from the out-of-vehicle heat exchanger are mixed into a gas-liquid mixed state, and the gas-liquid mixed refrigerant is throttled and depressurized by the third electronic expansion valve 65 and then flows to the evaporator 120. The refrigerant absorbs heat and is vaporized at the evaporator 120 to finally become a low-temperature and low-pressure gaseous refrigerant, which flows in from the air inlet of the compressor 11. Therefore, the in-vehicle condenser 15 heats the passenger compartment, and the evaporator 120 refrigerates the passenger compartment, so that moisture in the passenger compartment is liquefied when encountering cold, thereby dehumidifying the passenger compartment.

Embodiment 13 is under working conditions of heating and dehumidifying the passenger compartment and cooling the battery module. Embodiment 13 is actually implemented by the simultaneous operation of Embodiment 11 and Embodiment 5.

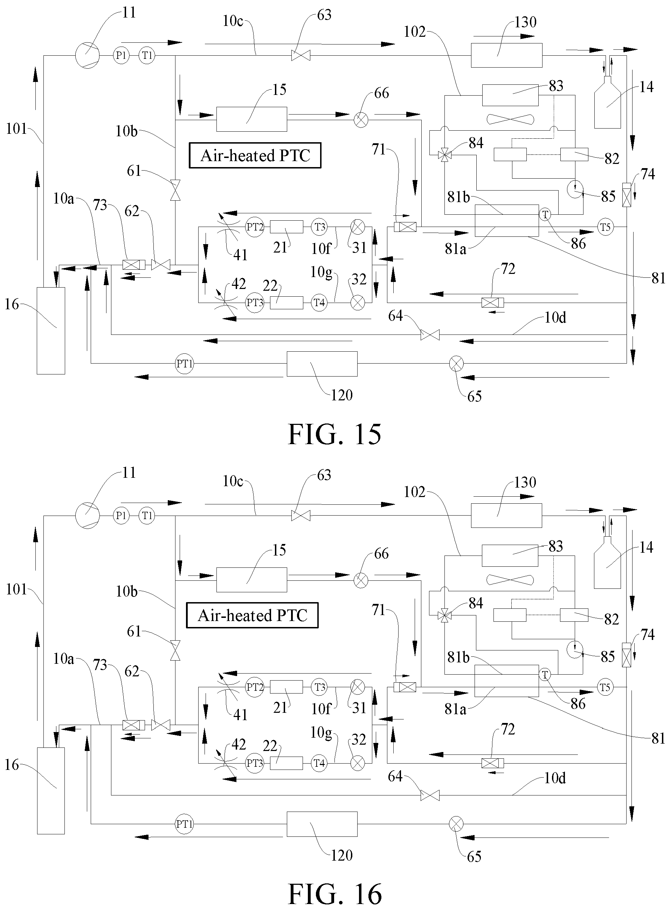

As shown in FIG. 15, under the working conditions of heating and dehumidifying the passenger compartment and cooling the battery module, a refrigerant flows in the first refrigerant loop formed by the compressor 11, the in-vehicle condenser 15 and the third heat exchanger 81, while a refrigerant flows in the third refrigerant loop formed by the compressor 11, the out-of-vehicle condenser 130 and the evaporator 120, and a refrigerant further flows in the fourth refrigerant loop formed by the compressor 11, the out-of-vehicle condenser 130 and the heat exchange assembly 2. In this case, the first on-off valve 61 disconnects the second exhaust flow channel 10b, the second on-off valve 62 connects the first exhaust flow channel 10a, the third on-off valve 63 connects the third exhaust flow channel 10c, and the fourth on-off valve 64 connects the bypass flow path 10d. The first electronic expansion valve 31 and the second electronic expansion valve 32 connect a pipeline to implement a throttling function, and the third electronic expansion valve 65 connects a pipeline to implement a throttling function. The fourth electronic expansion valve 66 connects a pipeline to implement a throttling function.

The high-temperature and high-pressure gaseous refrigerant flows out from the exhaust port of the compressor 11 and partially flows to the in-vehicle condenser 15 through the second exhaust flow channel 10b, and the refrigerant is liquefied and releases heat at the in-vehicle condenser 15. Then the refrigerant is throttled and depressurized by the fourth electronic expansion valve 66 and then flows to the third heat exchanger 81, and the refrigerant absorbs heat and is vaporized at the third heat exchanger 81 and flows out from the third heat exchanger 81. The other part of the refrigerant flows to the out-of-vehicle condenser 130 through the third exhaust flow channel 10c, and the refrigerant is liquefied and releases heat at the out-of-vehicle condenser 130 and flows out from the out-of-vehicle condenser 130. The refrigerant flowing out of the third heat exchanger 81 and the refrigerant flowing out of the out-of-vehicle heat exchanger are mixed into a gas-liquid mixed state. The gaseous refrigerant flows in from the air inlet of the compressor 11 along the bypass flow path 10d, and the liquid refrigerant is partially throttled and depressurized by the third electronic expansion valve 65 and then flows to the evaporator 120. The refrigerant absorbs heat and is vaporized at the evaporator 120 to finally become a low-temperature and low-pressure gaseous refrigerant, which flows in from the air inlet of the compressor 11. The other part of the refrigerant is throttled and depressurized by the first electronic expansion valve 31 and the second electronic expansion valve 32 and then flows to the first heat exchange plate 21 and the second heat exchange plate 22. The refrigerant absorbs heat and is vaporized at the first heat exchange plate 21 and the second heat exchange plate 22, and is throttled and depressurized by the first throttling element 41 and the second throttling element 42 to finally become a low-temperature and low-pressure gaseous refrigerant, which flows in from the air inlet of the compressor 11. Therefore, the in-vehicle condenser 15 heats the passenger compartment, and the evaporator 120 refrigerates the passenger compartment, so that moisture in the passenger compartment is liquefied when encountering cold, thereby dehumidifying the passenger compartment, and refrigerating the battery module by the first heat exchange plate 21 and the second heat exchange plate 22.

Embodiment 14 is under working conditions of heating and dehumidifying the passenger compartment and cooling the battery module. Embodiment 14 is actually implemented by the simultaneous operation of Embodiment 12 and Embodiment 5.

As shown in FIG. 16, under the working conditions of heating and dehumidifying the passenger compartment and cooling the battery module, a refrigerant flows in the seventh refrigerant loop formed by the compressor 11, the in-vehicle condenser 15, the third heat exchanger 81 and the evaporator 120, while a refrigerant flows in the third refrigerant loop formed by the compressor 11, the out-of-vehicle condenser 130 and the evaporator 120, and a refrigerant further flows in the fourth refrigerant loop formed by the compressor 11, the out-of-vehicle condenser 130 and the heat exchange assembly 2. In this case, the first on-off valve 61 disconnects the second exhaust flow channel 10b, the second on-off valve 62 connects the first exhaust flow channel 10a, the third on-off valve 63 connects the third exhaust flow channel 10c, and the fourth on-off valve 64 disconnects the bypass flow path 10d. The first electronic expansion valve 31 and the second electronic expansion valve 32 connect a pipeline to implement a throttling function, and the third electronic expansion valve 65 connects a pipeline to implement a throttling function. The fourth electronic expansion valve 66 connects a pipeline to implement a throttling function.

The high-temperature and high-pressure gaseous refrigerant flows out from the exhaust port of the compressor 11 and partially flows to the in-vehicle condenser 15 through the second exhaust flow channel 10b, and the refrigerant is liquefied and releases heat at the in-vehicle condenser 15. Then the refrigerant is throttled and depressurized by the fourth electronic expansion valve 66 and then flows to the third heat exchanger 81, and the refrigerant absorbs heat and is vaporized at the third heat exchanger 81 and flows out from the third heat exchanger 81. The other part of the refrigerant flows to the out-of-vehicle condenser 130 through the third exhaust flow channel 10c, and the refrigerant is liquefied and releases heat at the out-of-vehicle condenser 130 and flows out from the out-of-vehicle condenser 130. The refrigerant flowing out of the third heat exchanger 81 and the refrigerant flowing out from the out-of-vehicle heat exchanger are mixed into a gas-liquid mixed state, and the gas-liquid mixed refrigerant is partially throttled and depressurized by the third electronic expansion valve 65 and then flows to the evaporator 120. The refrigerant absorbs heat and is vaporized at the evaporator 120 to finally become a low-temperature and low-pressure gaseous refrigerant, which flows in from the air inlet of the compressor 11. The other part of the gas-liquid mixed refrigerant is throttled and depressurized by the first electronic expansion valve 31 and the second electronic expansion valve 32 and then flows to the first heat exchange plate 21 and the second heat exchange plate 22. The refrigerant absorbs heat and is vaporized at the first heat exchange plate 21 and the second heat exchange plate 22, and is throttled and depressurized by the first throttling element 41 and the second throttling element 42 to finally become a low-temperature and low-pressure gaseous refrigerant, which flows in from the air inlet of the compressor 11. Therefore, the in-vehicle condenser 15 heats the passenger compartment, and the evaporator 120 refrigerates the passenger compartment, so that moisture in the passenger compartment is liquefied when encountering cold, thereby dehumidifying the passenger compartment, and refrigerating the battery module by the first heat exchange plate 21 and the second heat exchange plate 22.

Embodiment 15 is under working conditions of heating and dehumidifying the passenger compartment and heating the battery module. Embodiment 15 is actually implemented by the simultaneous operation of Embodiment 11 and Embodiment 2.

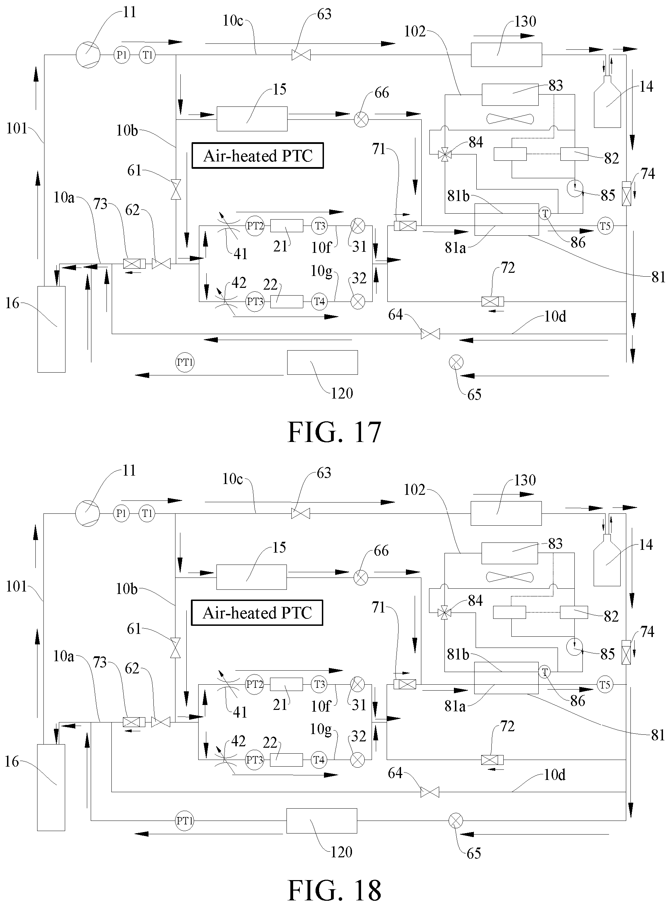

As shown in FIG. 17, under the working conditions of heating and dehumidifying the passenger compartment and heating the battery module, a refrigerant flows in the first refrigerant loop formed by the compressor 11, the in-vehicle condenser 15 and the third heat exchanger 81, while a refrigerant flows in the third refrigerant loop formed by the compressor 11, the out-of-vehicle condenser 130 and the evaporator 120, and a refrigerant further flows in the second refrigerant loop formed by the compressor 11, the out-of-vehicle condenser 130 and the heat exchange assembly 2. In this case, the first on-off valve 61 connects the second exhaust flow channel 10b, the second on-off valve 62 disconnects the first exhaust flow channel 10a, the third on-off valve 63 connects the third exhaust flow channel 10c, and the fourth on-off valve 64 connects the bypass flow path 10d. The first electronic expansion valve 31 and the second electronic expansion valve 32 connect a pipeline to implement a throttling function, and the third electronic expansion valve 65 connects a pipeline to implement a throttling function. The fourth electronic expansion valve 66 connects a pipeline to implement a throttling function.

The high-temperature and high-pressure gaseous refrigerant flows out from the exhaust port of the compressor 11 and partially flows to the in-vehicle condenser 15 through the second exhaust flow channel 10b, and the refrigerant is liquefied and releases heat at the in-vehicle condenser 15. Then the refrigerant is throttled and depressurized by the fourth electronic expansion valve 66 and then flows to the third heat exchanger 81, and the refrigerant absorbs heat and is vaporized at the third heat exchanger 81 and flows out from the third heat exchanger 81. Part of the refrigerant flows to the heat exchange assembly 2 through the second exhaust flow channel 10b. After the refrigerant is first depressurized by the first throttling element 41 and the second throttling element 42, the refrigerant is liquefied and releases heat at the first heat exchange plate 21 and the second heat exchange plate 22. Then the refrigerant is throttled and depressurized by the third electronic expansion valve 65 and the fourth expansion valve and then is mixed with the refrigerant flowing out from the fourth expansion valve to flow to the third heat exchanger 81, and the refrigerant absorbs heat and is vaporized at the third heat exchanger 81 and flows out from the third heat exchanger 81. The remaining part flows to the out-of-vehicle condenser 130 through the third exhaust flow channel 10c, and the refrigerant is liquefied and releases heat at the out-of-vehicle condenser 130 and flows out from the out-of-vehicle condenser 130.

The refrigerant flowing out of the third heat exchanger 81 and the refrigerant flowing out of the out-of-vehicle heat exchanger are mixed into a gas-liquid mixed state. The gaseous refrigerant flows in from the air inlet of the compressor 11 along the bypass flow path 10d, and the liquid refrigerant is throttled and depressurized by the third electronic expansion valve 65 and then flows to the evaporator 120. The refrigerant absorbs heat and is vaporized at the evaporator 120 to finally become a low-temperature and low-pressure gaseous refrigerant, which flows in from the air inlet of the compressor 11. Therefore, the in-vehicle condenser 15 heats the passenger compartment, and the evaporator 120 refrigerates the passenger compartment, so that moisture in the passenger compartment is liquefied when encountering cold, thereby dehumidifying the passenger compartment, and heating the battery module by the first heat exchange plate 21 and the second heat exchange plate 22.

Embodiment 16 is under working conditions of heating and dehumidifying the passenger compartment and heating the battery module. Embodiment 15 is actually implemented by the simultaneous operation of Embodiment 12 and Embodiment 2.

As shown in FIG. 18, under the working conditions of heating and dehumidifying the passenger compartment and heating the battery module, a refrigerant flows in the seventh refrigerant loop formed by the compressor 11, the in-vehicle condenser 15, the third heat exchanger 81 and the evaporator 120, while a refrigerant flows in the third refrigerant loop formed by the compressor 11, the out-of-vehicle condenser 130 and the evaporator 120, and a refrigerant further flows in the second refrigerant loop formed by the compressor 11, the out-of-vehicle condenser 130 and the heat exchange assembly 2. In this case, the first on-off valve 61 connects the second exhaust flow channel 10b, the second on-off valve 62 disconnects the first exhaust flow channel 10a, the third on-off valve 63 connects the third exhaust flow channel 10c, and the fourth on-off valve 64 disconnects the bypass flow path 10d. The first electronic expansion valve 31 and the second electronic expansion valve 32 connect a pipeline to implement a throttling function, and the third electronic expansion valve 65 connects a pipeline to implement a throttling function. The fourth electronic expansion valve 66 connects a pipeline to implement a throttling function.

The high-temperature and high-pressure gaseous refrigerant flows out from the exhaust port of the compressor 11 and partially flows to the in-vehicle condenser 15 through the second exhaust flow channel 10b, and the refrigerant is liquefied and releases heat at the in-vehicle condenser 15. Then the refrigerant is throttled and depressurized by the fourth electronic expansion valve 66 and then flows to the third heat exchanger 81, and the refrigerant absorbs heat and is vaporized at the third heat exchanger 81 and flows out from the third heat exchanger 81. Part of the refrigerant flows to the heat exchange assembly 2 through the second exhaust flow channel 10b. After the refrigerant is first depressurized by the first throttling element 41 and the second throttling element 42, the refrigerant is liquefied and releases heat at the first heat exchange plate 21 and the second heat exchange plate 22. Then the refrigerant is throttled and depressurized by the third electronic expansion valve 65 and the fourth expansion valve and then is mixed with the refrigerant flowing out from the fourth expansion valve to flow to the third heat exchanger 81, and the refrigerant absorbs heat and is vaporized at the third heat exchanger 81 and flows out from the third heat exchanger 81. The remaining part flows to the out-of-vehicle condenser 130 through the third exhaust flow channel 10c, and the refrigerant is liquefied and releases heat at the out-of-vehicle condenser 130 and flows out from the out-of-vehicle condenser 130.

The refrigerant flowing out of the third heat exchanger 81 and the refrigerant flowing out from the out-of-vehicle heat exchanger are mixed into a gas-liquid mixed state, and the gas-liquid mixed refrigerant is throttled and depressurized by the third electronic expansion valve 65 and then flows to the evaporator 120. The refrigerant absorbs heat and is vaporized at the evaporator 120 to finally become a low-temperature and low-pressure gaseous refrigerant, which flows in from the air inlet of the compressor 11. Therefore, the in-vehicle condenser 15 heats the passenger compartment, and the evaporator 120 refrigerates the passenger compartment, so that moisture in the passenger compartment is liquefied when encountering cold, thereby dehumidifying the passenger compartment, and heating the battery module by the first heat exchange plate 21 and the second heat exchange plate 22.

The above-mentioned several embodiments are intended only to facilitate the description of the present disclosure and to simplify the description, but are not intended to indicate or imply that the thermal management system 100 can only operate as shown in the embodiments under a working condition, and therefore the embodiments cannot be understood as a limitation to the present disclosure.

In some embodiments of the present disclosure, as shown in FIG. 2, the high-pressure thermal management subsystem 1001 further includes: a switching valve group 84. The switching valve group 84 is connected to both ends of the circulation loop 102, the first radiator 82 and the second radiator 83. The switching valve group 84 operates to switch the high-pressure thermal management subsystem 1001 between a first working condition and a second working condition.

The switching valve group 84 can control a flow direction of the coolant, and may heat the refrigerant with heat generated by the electronic motor control of the vehicle, or may dissipate the heat generated by the electronic motor control of the vehicle to the outside of the vehicle through the second radiator 83.

In an embodiment of the present disclosure, as shown in FIG. 2, the switching valve group 84 is a four-way water valve. The four-way water valve includes a first valve 841, a second valve 842, a third valve 843 and a fourth valve 844 that are in communication with each other. The first valve 841 is connected to the third heat exchanger 81, and the second valve 842 is connected to the first radiator 82. The third valve 843 is connected to the second radiator 83, and the fourth valve 844 is connected between the first radiator 82 and the second radiator 83.

In some embodiments of the present disclosure, the high-pressure thermal management system 100 further includes a water pump 85, and the water pump 85 is arranged between the first radiator 82 and the third heat exchanger 81. The water pump 85 is configured to pump the coolant from the first radiator 82 to the third heat exchanger 81.

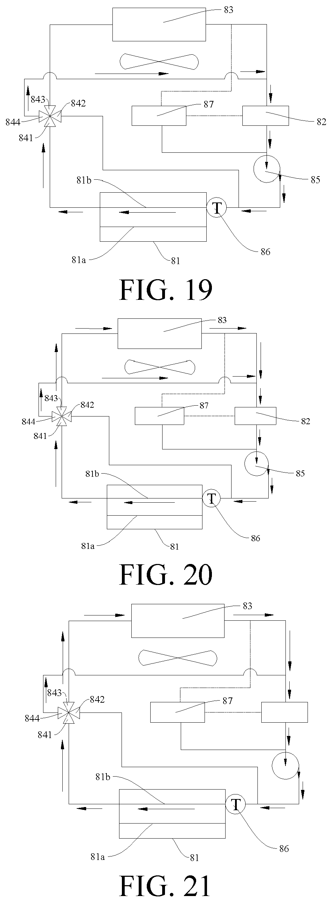

As shown in FIG. 19, the high-pressure thermal management subsystem 1001 has a first working condition. Under the first working condition, the first radiator 82 and the second flow channel 81b form a first loop. In this case, the first valve 841 and the fourth valve 844 of the four-way water valve are opened, and the second valve 842 and the third valve 843 are closed.

The coolant flowing out of the first radiator 82 flows to the third heat exchanger 81 under the action of the water pump 85, and after exchanging, in the second flow channel 81b of the third heat exchanger 81, heat with the refrigerant in the first flow channel 81a, the coolant flows back to the first radiator 82 to exchange heat with the electronic motor control of the vehicle.

When the refrigerant circulation loop 101 has a heat absorption demand and the high-pressure thermal management subsystem 1001 has no heat dissipation demand, the high-pressure thermal management subsystem 1001 may operate under the first working condition. The high-temperature coolant flowing out of the first radiator 82 flows into the second flow channel 81b, and exchanges heat with the low-temperature refrigerant flowing through the first flow channel 81a, so that heat generated by the electronic motor control of the vehicle is transferred to the refrigerant circulation loop 101, and the heat generated by the electronic motor control of the vehicle is effectively utilized, thereby reducing energy consumption of the thermal management system 100 while improving the heating capacity of the thermal management system 100.

As shown in FIG. 21, the high-pressure thermal management subsystem 1001 further has a second working condition. Under the second working condition, the first radiator 82, the second radiator 83 and the second flow channel 81b form a second loop. In this case, the first valve 841 and the third valve 843 of the four-way water valve are opened, and the second valve 842 and the fourth valve 844 are closed.

The coolant flowing out of the first radiator 82 flows to the third heat exchanger 81 under the action of the water pump 85, and after exchanging, in the second flow channel 81b of the third heat exchanger 81, heat with the refrigerant in the first flow channel 81a, the coolant flows to the second radiator 83. After exchanging heat at the second radiator 83, the coolant flows back to the first radiator 82 to exchange heat with the electronic motor control of the vehicle.

When the refrigerant circulation loop 101 has a heat absorption demand, the high-pressure thermal management subsystem 1001 has a heat dissipation demand, and the heat dissipation demand of the high-pressure thermal management subsystem 1001 is greater than the heat absorption demand of the refrigerant circulation loop 101, the high-pressure thermal management subsystem 1001 may operate under the second working condition. The high-temperature coolant flowing out of the first radiator 82 flows into the second flow channel 81b, and exchanges heat with the low-temperature refrigerant flowing through the first flow channel 81a, to transfer heat generated by the electronic motor control of the vehicle to the refrigerant circulation loop 101. However, the temperature of the coolant is still high after heat exchange for once. Therefore, the coolant flows to the second radiator 83 to exchange heat with an environment outside the vehicle for the second time to dissipate heat. The heat generated by the electronic motor control of the vehicle is effectively utilized, thereby reducing energy consumption of the thermal management system 100 while improving the heating capacity of the thermal management system 100.

In addition, when the refrigerant circulation loop 101 has a heat absorption demand, but the heat generated by the high-pressure thermal management subsystem 1001 is insufficient, and the temperature of the coolant is lower than the temperature of the environment outside the vehicle, the high-pressure thermal management subsystem 1001 may alternatively operate under the second working condition. The coolant exchanges, at the second radiator 83, heat with the environment outside the vehicle, to increase the temperature of the coolant. Then the coolant flows to the first radiator 82 and the third heat exchanger 81 through the circulation loop 102, exchanges heat with the low-temperature refrigerant flowing through the first flow channel 81a, and transfers the heat of the environment outside the vehicle to the refrigerant circulation loop 101 and the high-pressure thermal management subsystem 1001. The heat can be effectively utilized, thereby reducing energy consumption of the thermal management system 100 while improving the heating capacity of the thermal management system 100.

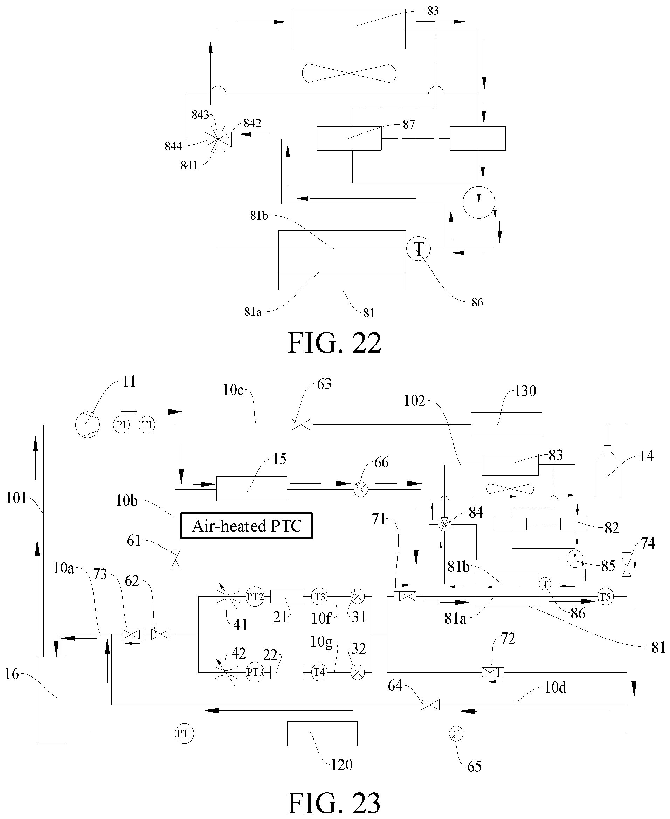

As shown in FIG. 22, the high-pressure thermal management subsystem 1001 further has a third working condition. Under the third working condition, the first radiator 82 and the second radiator 83 form a third loop. In this case, the second valve 842 and the third valve 843 of the four-way water valve are opened, and the first valve 841 and the fourth valve 844 are closed.

The coolant flowing out of the first radiator 82 flows to the second radiator 83 under the action of the water pump 85. After exchanging, in the second radiator 83, heat with the environment outside the vehicle, the coolant flows back to the first radiator 82 to exchange heat with the electronic motor control of the vehicle.

When the refrigerant circulation loop 101 does not need to absorb heat from the coolant, the high-pressure thermal management subsystem 1001 operates under the third working condition regardless of whether the high-pressure thermal management subsystem 1001 has a heat dissipation demand. The high-temperature coolant flowing from the first radiator 82 directly flows to the second radiator 83 to exchange heat with the environment outside the vehicle, and the heat generated by the electronic motor control of the vehicle is dissipated to the environment outside the vehicle, so that the high-pressure thermal management subsystem 1001 quickly dissipates heat.

As shown in FIG. 20, the high-pressure thermal management subsystem 1001 further has a mixed working condition. Under the mixed working condition, the first loop and the second loop circulate simultaneously. In this case, the first valve 841, the third valve 843 and the fourth valve 844 of the four-way water valve are opened, and the second valve 842 is closed.

The coolant flowing out of the first radiator 82 flows to the third heat exchanger 81 under the action of the water pump 85, and after the coolant exchanges, in the second flow channel 81b of the third heat exchanger 81, heat with the refrigerant in the first flow channel 81a, part of the coolant directly flows back to the first radiator 82 to exchange heat with the electronic motor control of the vehicle, and the other part thereof flows to the second radiator 83. After exchanging heat at the second radiator 83, the coolant flows back to the first radiator 82 to exchange heat with the electronic motor control of the vehicle.

When the refrigerant circulation loop 101 has a heat absorption demand, the high-pressure thermal management subsystem 1001 has a heat dissipation demand, and the heat absorption demand of the refrigerant circulation loop 101 is greater than the heat dissipation demand of the high-pressure thermal management subsystem 1001, the high-pressure thermal management subsystem 1001 may operate under the mixed working condition.

The high-temperature coolant flowing out of the first radiator 82 flows into the second flow channel 81b, and exchanges heat with the low-temperature refrigerant flowing through the first flow channel 81a, to transfer heat generated by the electronic motor control of the vehicle to the refrigerant circulation loop 101. Part of the coolant after heat exchange flows back to the first radiator 82, and the other part of the coolant flows to the second radiator 83 to exchange heat with the environment outside the vehicle for the second time to dissipate heat. The heat generated by the electronic motor control of the vehicle is effectively utilized, thereby reducing energy consumption of the thermal management system 100 while improving the heating capacity of the thermal management system 100.

The high-pressure thermal management subsystem 1001 has the first working condition, the second working condition, the third working condition and the mixed working condition. The coolant in the circulation loop under the third working condition does not exchange heat with the refrigerant in the refrigerant circulation loop 101, and the coolant in the circulation loop under each of the first working condition, the second working condition and the mixed working condition heats the refrigerant in the refrigerant circulation loop 101. Therefore, the operation of the thermal management system 100 under different working conditions can further cooperate with the operation of the high-pressure thermal management subsystem 1001 under different working conditions.

For example, when there is only the working condition of heating the passenger compartment, the working condition can cooperate with the first working condition, the second working condition and the mixed working condition of the high-pressure thermal management subsystem 1001.

Embodiment 17 is only under a working condition of heating the passenger compartment. As shown in FIG. 23, in this case, the refrigerant is operated based on the working condition of Embodiment 1, while the coolant is operated based on the first working condition.

A circulation path of the refrigerant in Embodiment 17 is briefly described below. The high-temperature and high-pressure gaseous refrigerant flows out from the exhaust port of the compressor 11 and flows to the in-vehicle condenser 15 through the second exhaust flow channel 10b, and the refrigerant is liquefied and releases heat at the in-vehicle condenser 15. Then the refrigerant is throttled and depressurized by the fourth electronic expansion valve 66 and then flows to the third heat exchanger 81. The refrigerant exchanges, in the first flow channel 81a in the third heat exchanger 81, heat with the coolant in the second flow channel 81b, and the refrigerant absorbs heat and is vaporized to finally become a low-temperature and low-pressure gaseous refrigerant, which flows in from the air inlet of the compressor 11 along the bypass flow path 10d, so that the in-vehicle condenser 15 heats the passenger compartment.

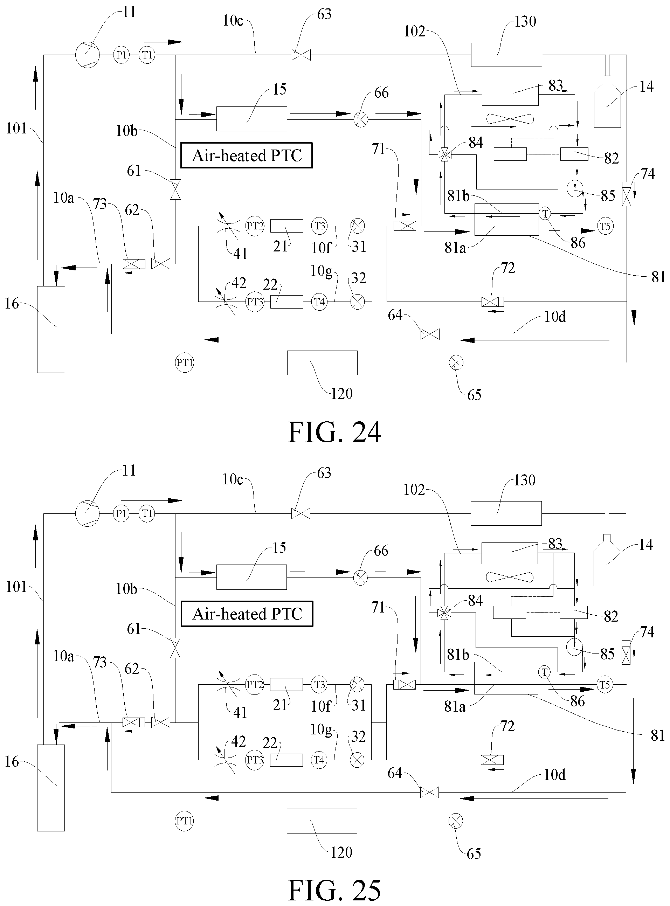

Embodiment 18 is only under a working condition of heating the passenger compartment. As shown in FIG. 24, in this case, the refrigerant is operated based on the working condition of Embodiment 1, while the coolant is operated based on the mixed working condition.

Embodiment 19 is only under a working condition of heating the passenger compartment. As shown in FIG. 25, in this case, the refrigerant is operated based on the working condition of Embodiment 1, while the coolant is operated based on the second working condition.

Similarly, the operation of the thermal management system 100 under different working conditions can cooperate with the first working condition, the second working condition and the mixed working condition of the high-pressure thermal management subsystem 1001.

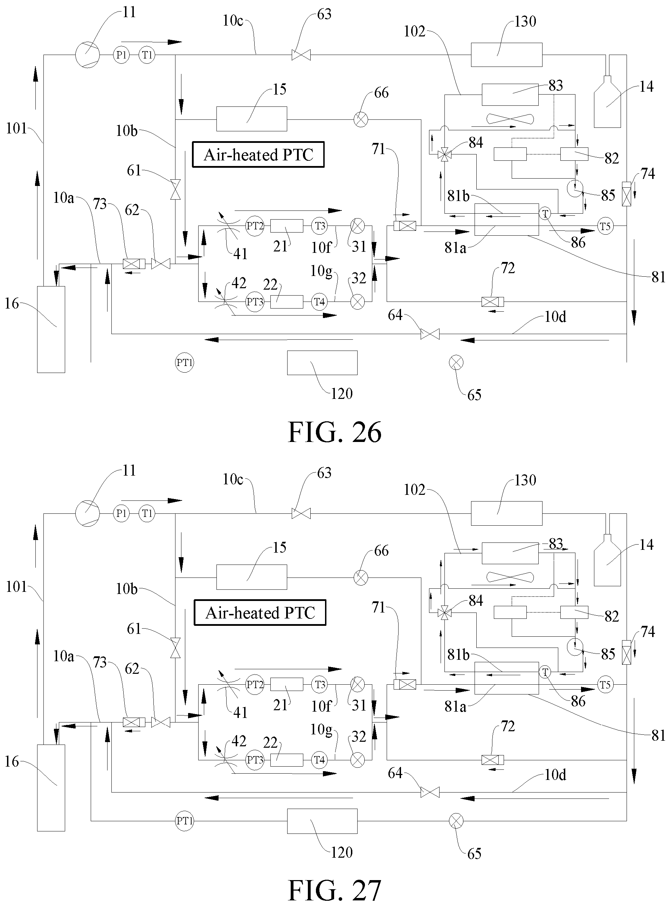

Embodiment 20 is only under a working condition of heating the battery module. As shown in FIG. 26, in this case, the refrigerant is operated based on the working condition of Embodiment 2, while the coolant is operated based on the first working condition.

Embodiment 21 is only under a working condition of heating the battery module. As shown in FIG. 27, in this case, the refrigerant is operated based on the working condition of Embodiment 2, while the coolant is operated based on the mixed working condition.

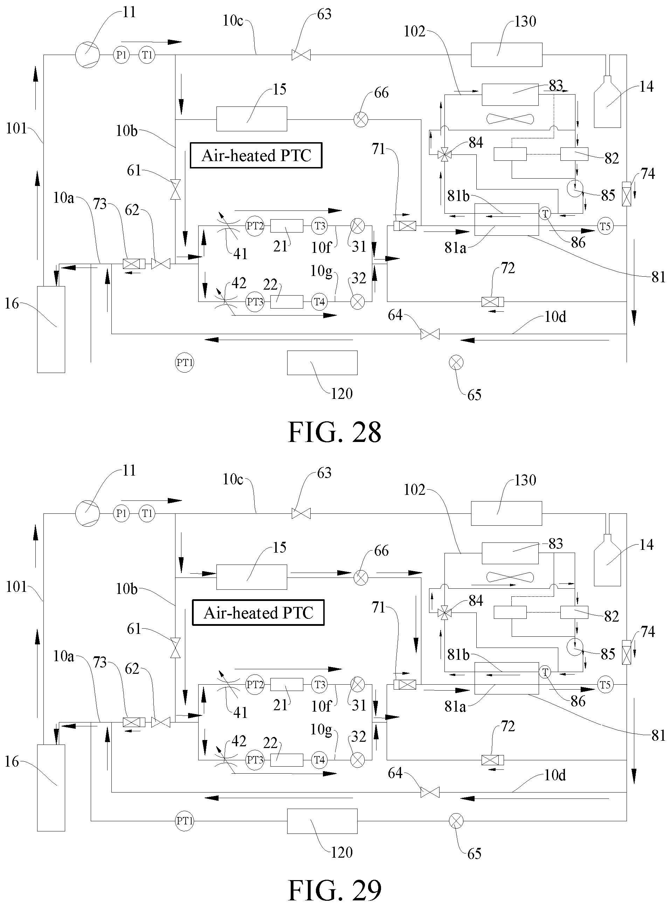

Embodiment 22 is only under a working condition of heating the battery module. As shown in FIG. 28, in this case, the refrigerant is operated based on the working condition of Embodiment 2, while the coolant is operated based on the second working condition.

Embodiment 23 is under working conditions of heating the passenger compartment and the battery module. As shown in FIG. 29, in this case, the refrigerant is operated based on the working condition of Embodiment 3, while the coolant is operated based on the first working condition.

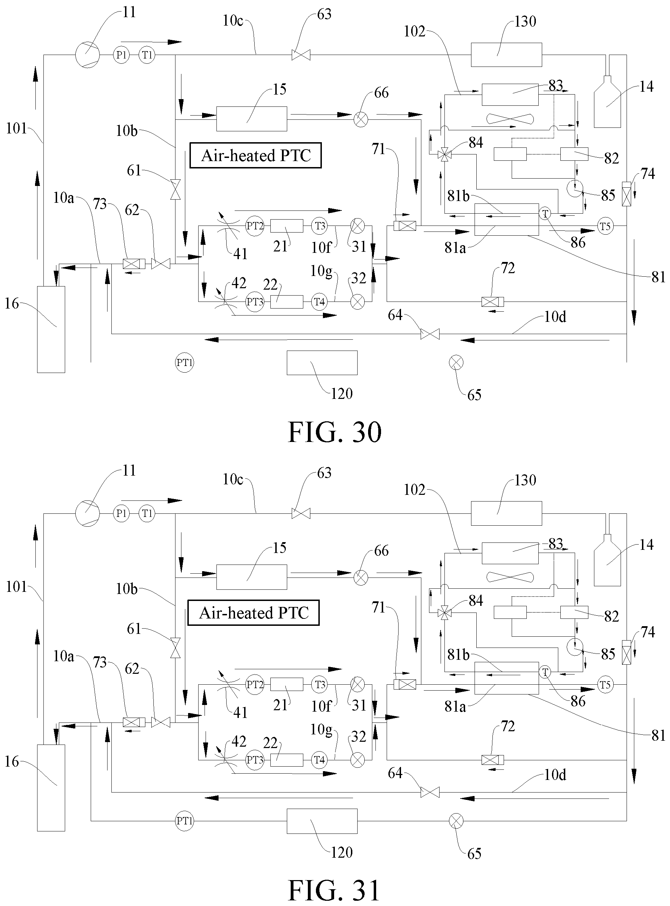

Embodiment 24 is under working conditions of heating the passenger compartment and the battery module. As shown in FIG. 30, in this case, the refrigerant is operated based on the working condition of Embodiment 3, while the coolant is operated based on the mixed working condition.

Embodiment 25 is under working conditions of heating the passenger compartment and the battery module. As shown in FIG. 31, in this case, the refrigerant is operated based on the working condition of Embodiment 3, while the coolant is operated based on the second working condition.

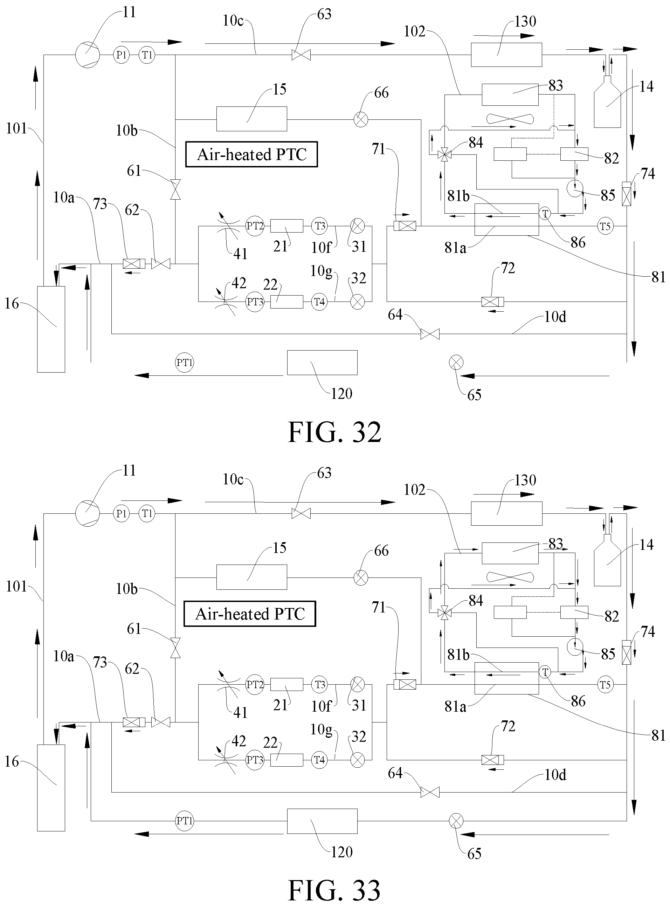

Embodiment 26 is only under a working condition of refrigerating the passenger compartment. As shown in FIG. 32, in this case, the refrigerant is operated based on the working condition of Embodiment 4, while the coolant is operated based on the first working condition.

Embodiment 27 is only under a working condition of refrigerating the passenger compartment. As shown in FIG. 33, in this case, the refrigerant is operated based on the working condition of Embodiment 4, while the coolant is operated based on the mixed working condition.

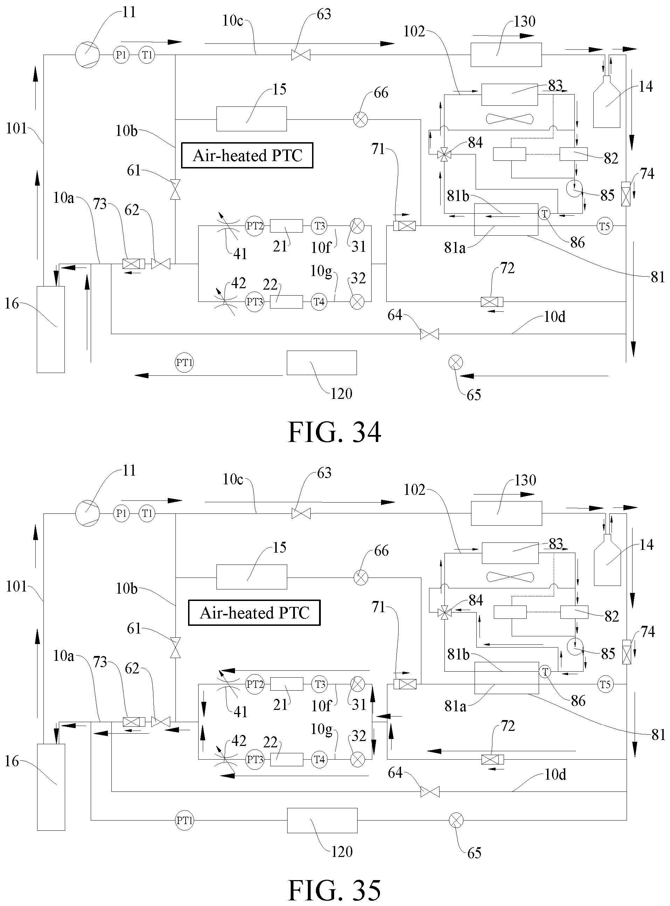

Embodiment 28 is only under a working condition of refrigerating the passenger compartment. As shown in FIG. 34, in this case, the refrigerant is operated based on the working condition of Embodiment 4, while the coolant is operated based on the second working condition.

Embodiment 29 is only under a working condition of cooling the battery module. As shown in FIG. 35, in this case, the refrigerant is operated based on the working condition of Embodiment 5, while the coolant is operated based on the third working condition. Since the refrigerant does not pass through the third heat exchanger 81, the coolant does not exchange heat with the refrigerant, and the refrigerant is operated based on the third working condition.

A circulation path of the refrigerant in Embodiment 29 is briefly described below. The high-temperature and high-pressure gaseous refrigerant flows out from the exhaust port of the compressor 11 and flows to the out-of-vehicle condenser 130 through the third exhaust flow channel 10c. The refrigerant is liquefied and releases heat at the out-of-vehicle condenser 130, and then the refrigerant is throttled and depressurized by the first electronic expansion valve 31 and the second electronic expansion valve 32 and then flows to the first heat exchange plate 21 and the second heat exchange plate 22. The refrigerant absorbs heat and is vaporized at the first heat exchange plate 21 and the second heat exchange plate 22, and is throttled and depressurized by the first throttling element 41 and the second throttling element 42 to finally become a low-temperature and low-pressure gaseous refrigerant, which flows in from the air inlet of the compressor 11, so that the first heat exchange plate 21 and the second heat exchange plate 22 refrigerate the battery module.

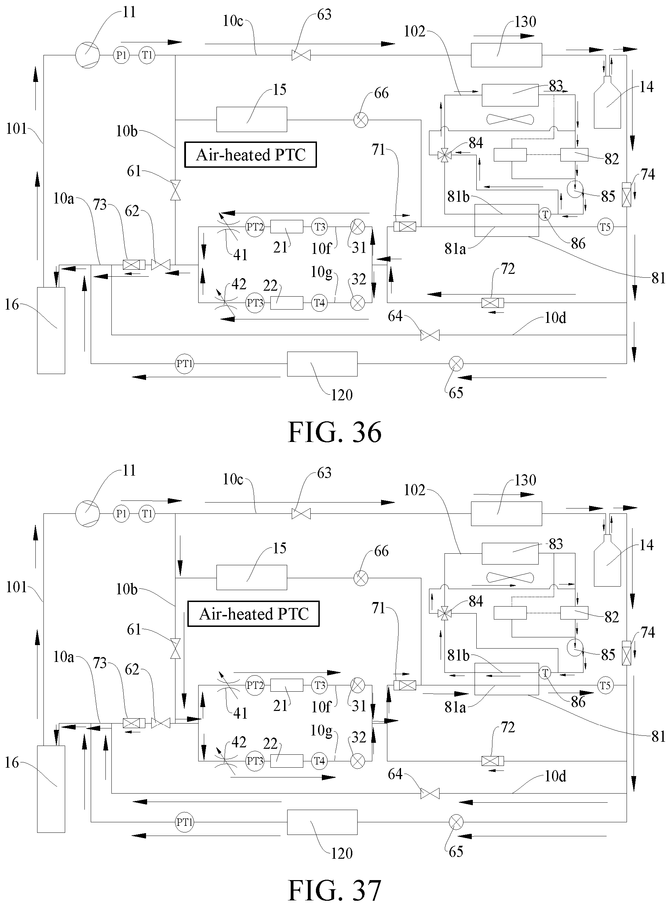

Embodiment 30 is under working conditions of refrigerating the passenger compartment and cooling the battery module. As shown in FIG. 36, in this case, the refrigerant is operated based on the working condition of Embodiment 6, while the coolant is operated based on the third working condition.

Embodiment 31 is under working conditions of refrigerating the passenger compartment and heating the battery module. As shown in FIG. 37, in this case, the refrigerant is operated based on the working condition of Embodiment 7, while the coolant is operated based on the first working condition.

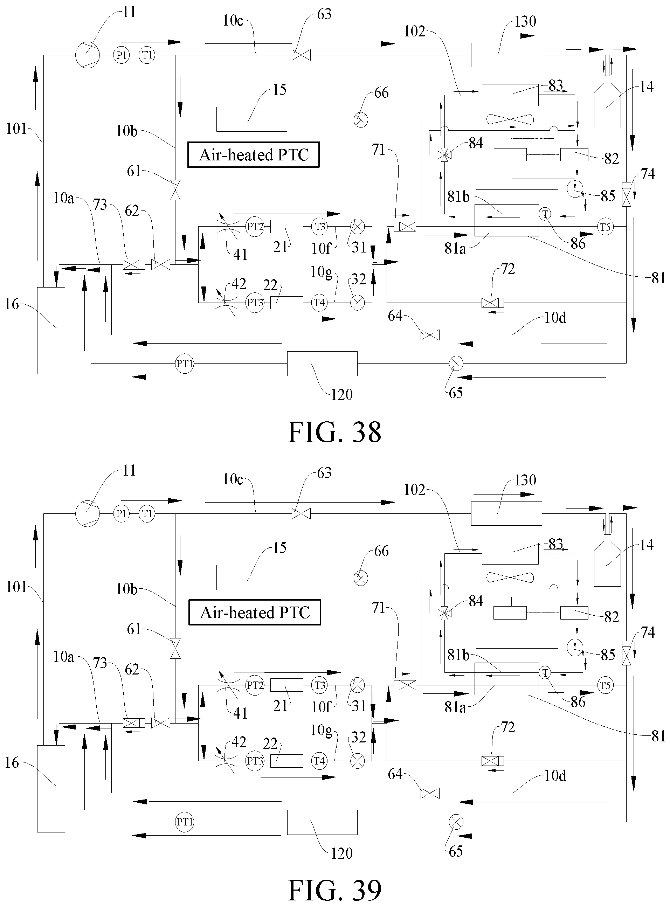

Embodiment 32 is under working conditions of refrigerating the passenger compartment and heating the battery module. As shown in FIG. 38, in this case, the refrigerant is operated based on the working condition of Embodiment 7, while the coolant is operated based on the mixed working condition.

Embodiment 33 is under working conditions of refrigerating the passenger compartment and heating the battery module. As shown in FIG. 39, in this case, the refrigerant is operated based on the working condition of Embodiment 7, while the coolant is operated based on the second working condition.

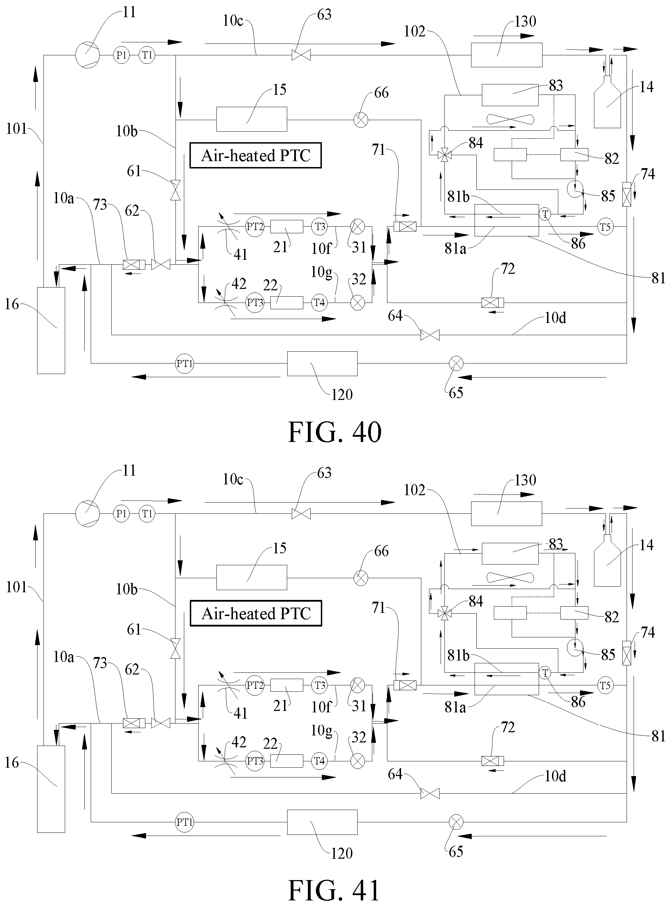

Embodiment 34 is under working conditions of refrigerating the passenger compartment and the battery module. As shown in FIG. 40, in this case, the refrigerant is operated based on the working condition of Embodiment 8, while the coolant is operated based on the first working condition.

Embodiment 35 is under working conditions of refrigerating the passenger compartment and heating the battery module. As shown in FIG. 41, in this case, the refrigerant is operated based on the working condition of Embodiment 8, while the coolant is operated based on the mixed working condition.

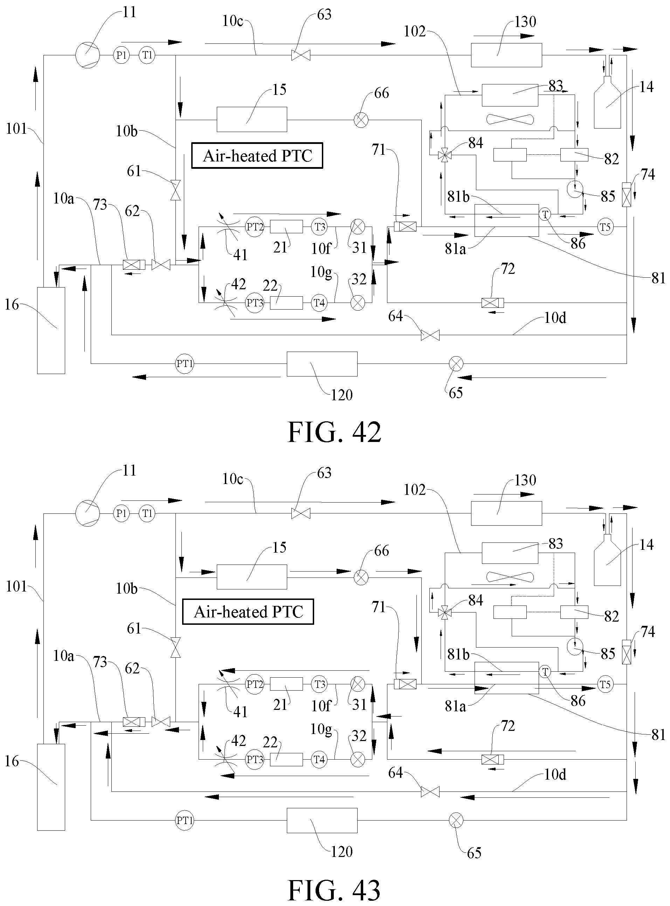

Embodiment 36 is under working conditions of refrigerating the passenger compartment and heating the battery module. As shown in FIG. 42, in this case, the refrigerant is operated based on the working condition of Embodiment 8, while the coolant is operated based on the second working condition.

Embodiment 37 is under working conditions of heating the passenger compartment and cooling the battery module. As shown in FIG. 43, in this case, the refrigerant is operated based on the working condition of Embodiment 9, while the coolant is operated based on the first working condition.

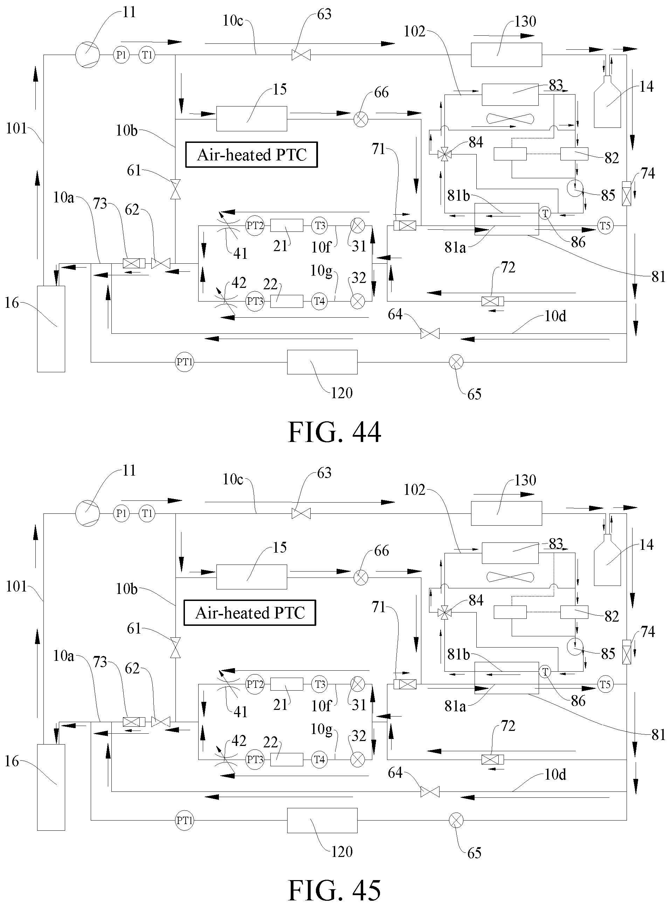

Embodiment 38 is under working conditions of heating the passenger compartment and cooling the battery module. As shown in FIG. 44, in this case, the refrigerant is operated based on the working condition of Embodiment 9, while the coolant is operated based on the mixed working condition.

Embodiment 39 is under working conditions of heating the passenger compartment and cooling the battery module. As shown in FIG. 45, in this case, the refrigerant is operated based on the working condition of Embodiment 9, while the coolant is operated based on the second working condition.

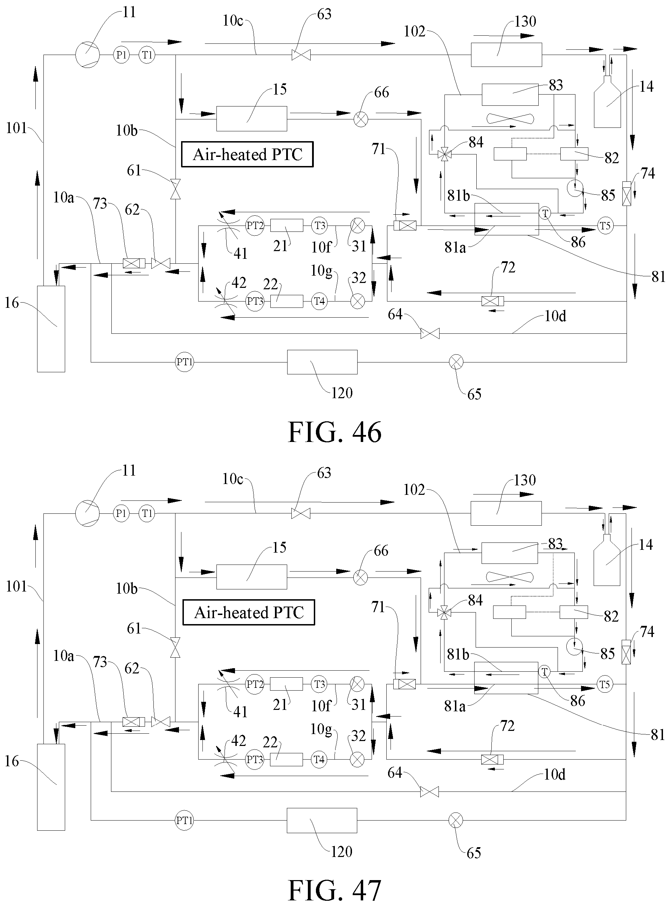

Embodiment 40 is under working conditions of heating the passenger compartment and cooling the battery module. As shown in FIG. 46, in this case, the refrigerant is operated based on the working condition of Embodiment 10, while the coolant is operated based on the first working condition.

Embodiment 41 is under working conditions of heating the passenger compartment and cooling the battery module. As shown in FIG. 47, in this case, the refrigerant is operated based on the working condition of Embodiment 10, while the coolant is operated based on the mixed working condition.

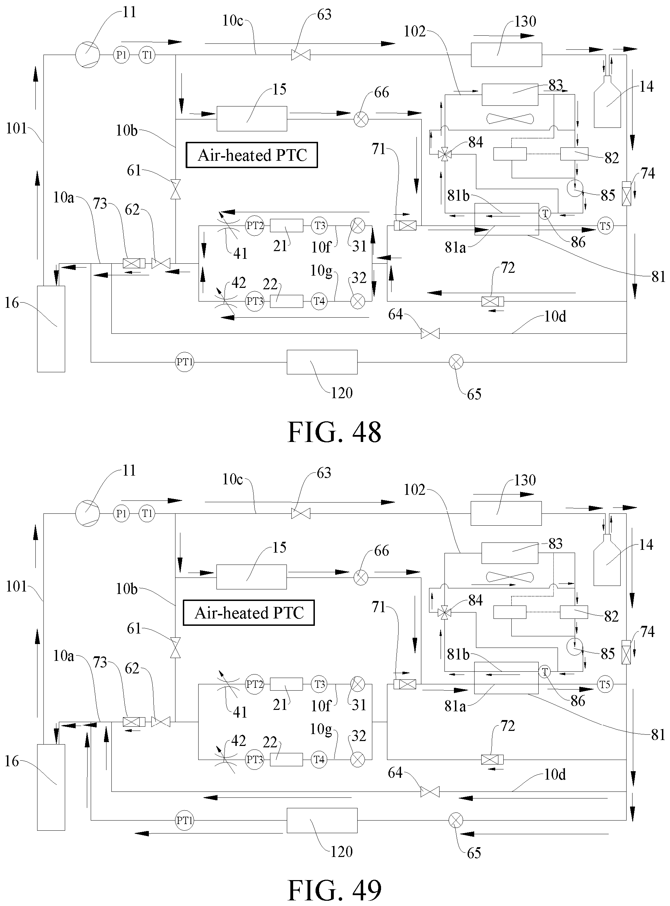

Embodiment 42 is under working conditions of heating the passenger compartment and cooling the battery module. As shown in FIG. 48, in this case, the refrigerant is operated based on the working condition of Embodiment 10, while the coolant is operated based on the second working condition.

Embodiment 43 is under working conditions of heating and dehumidifying the passenger compartment. As shown in FIG. 49, in this case, the refrigerant is operated based on the working condition of Embodiment 11, while the coolant is operated based on the first working condition.

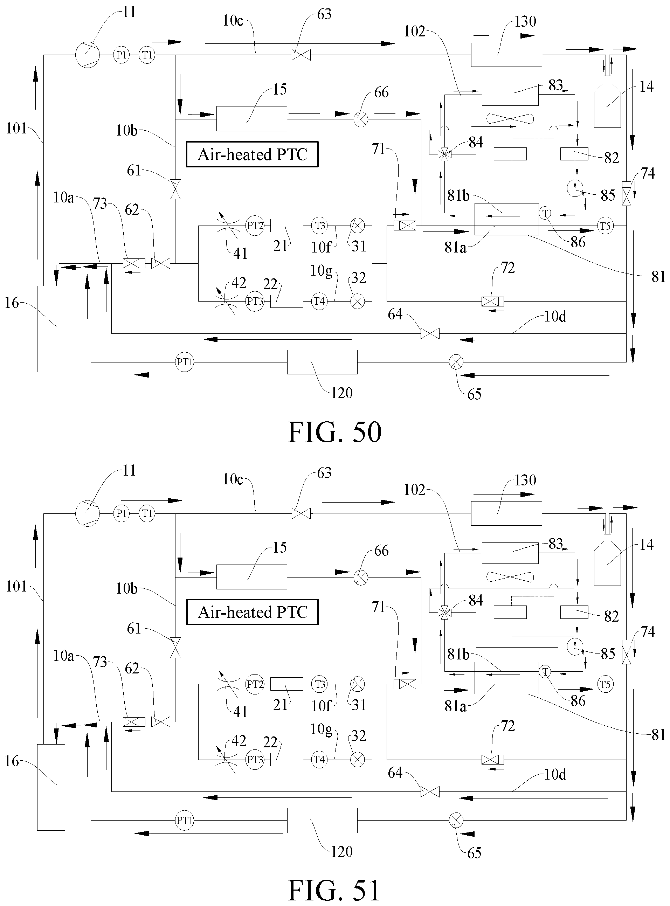

Embodiment 44 is under working conditions of heating and dehumidifying the passenger compartment. As shown in FIG. 50, in this case, the refrigerant is operated based on the working condition of Embodiment 11, while the coolant is operated based on the mixed working condition.

Embodiment 45 is under working conditions of heating and dehumidifying the passenger compartment. As shown in FIG. 51, in this case, the refrigerant is operated based on the working condition of Embodiment 11, while the coolant is operated based on the second working condition.

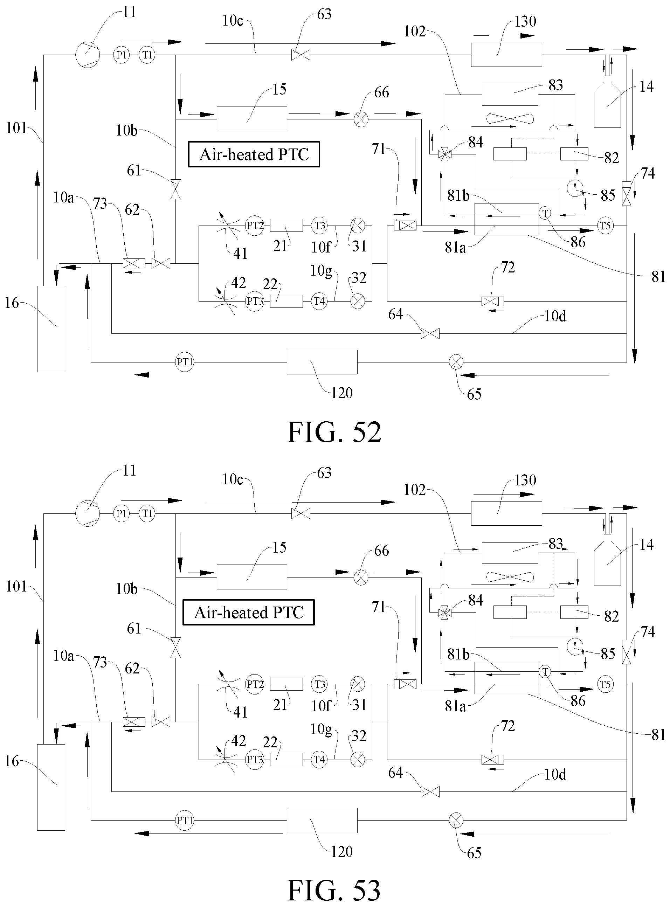

Embodiment 46 is under working conditions of heating and dehumidifying the passenger compartment. As shown in FIG. 52, in this case, the refrigerant is operated based on the working condition of Embodiment 12, while the coolant is operated based on the first working condition.

Embodiment 47 is under working conditions of heating and dehumidifying the passenger compartment. As shown in FIG. 53, in this case, the refrigerant is operated based on the working condition of Embodiment 12, while the coolant is operated based on the mixed working condition.

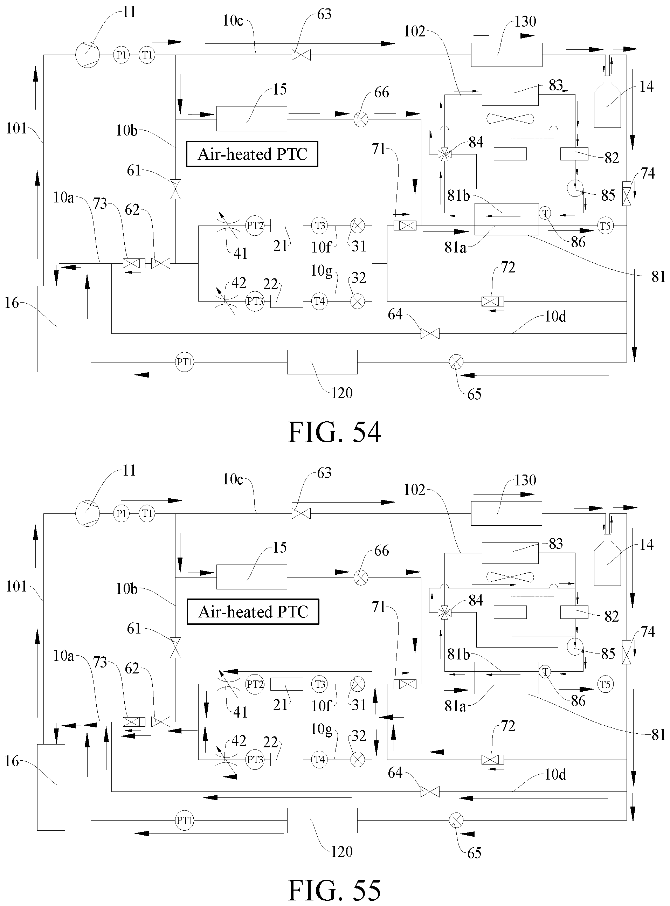

Embodiment 48 is under working conditions of heating and dehumidifying the passenger compartment. As shown in FIG. 54, in this case, the refrigerant is operated based on the working condition of Embodiment 12, while the coolant is operated based on the second working condition.

Embodiment 49 is under working conditions of heating and dehumidifying the passenger compartment and cooling the battery module. As shown in FIG. 55, in this case, the refrigerant is operated based on the working condition of Embodiment 13, while the coolant is operated based on the first working condition.

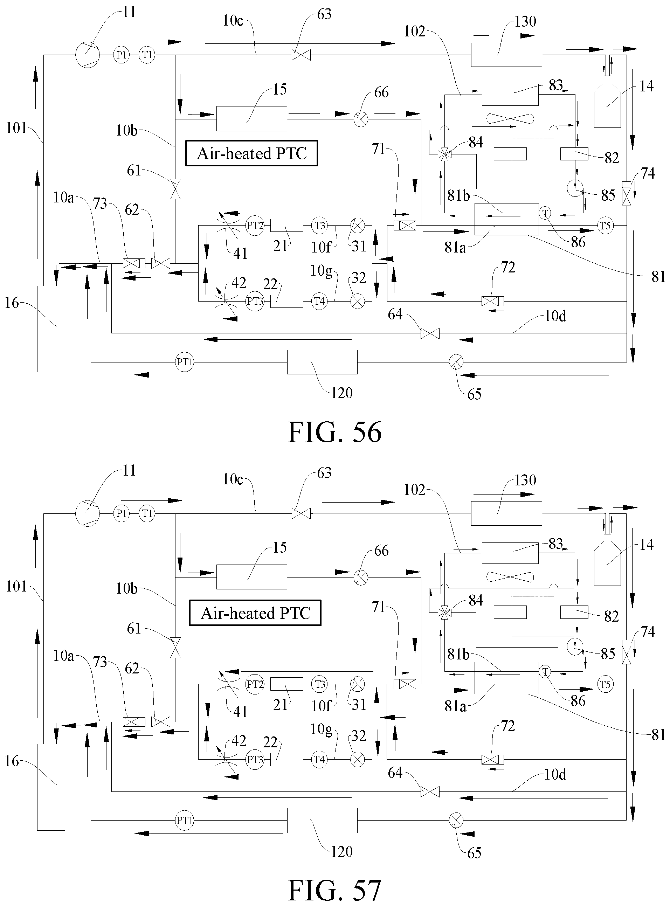

Embodiment 50 is under working conditions of heating and dehumidifying the passenger compartment and cooling the battery module. As shown in FIG. 56, in this case, the refrigerant is operated based on the working condition of Embodiment 13, while the coolant is operated based on the mixed working condition.

Embodiment 51 is under working conditions of heating and dehumidifying the passenger compartment and cooling the battery module. As shown in FIG. 57, in this case, the refrigerant is operated based on the working condition of Embodiment 13, while the coolant is operated based on the second working condition.

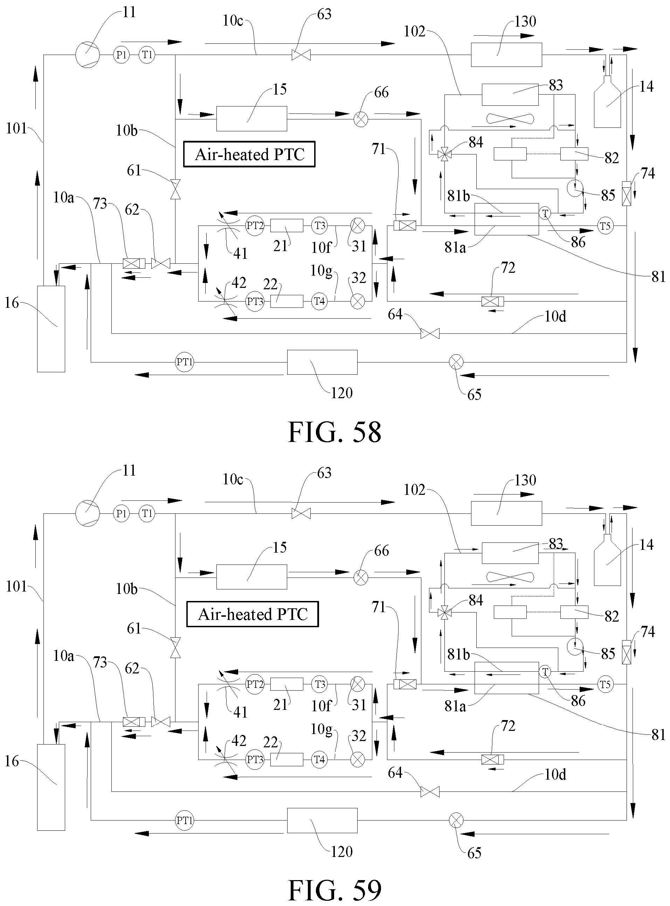

Embodiment 52 is under working conditions of heating and dehumidifying the passenger compartment and cooling the battery module. As shown in FIG. 58, in this case, the refrigerant is operated based on the working condition of Embodiment 14, while the coolant is operated based on the first working condition.

Embodiment 53 is under working conditions of heating and dehumidifying the passenger compartment and cooling the battery module. As shown in FIG. 59, in this case, the refrigerant is operated based on the working condition of Embodiment 14, while the coolant is operated based on the mixed working condition.

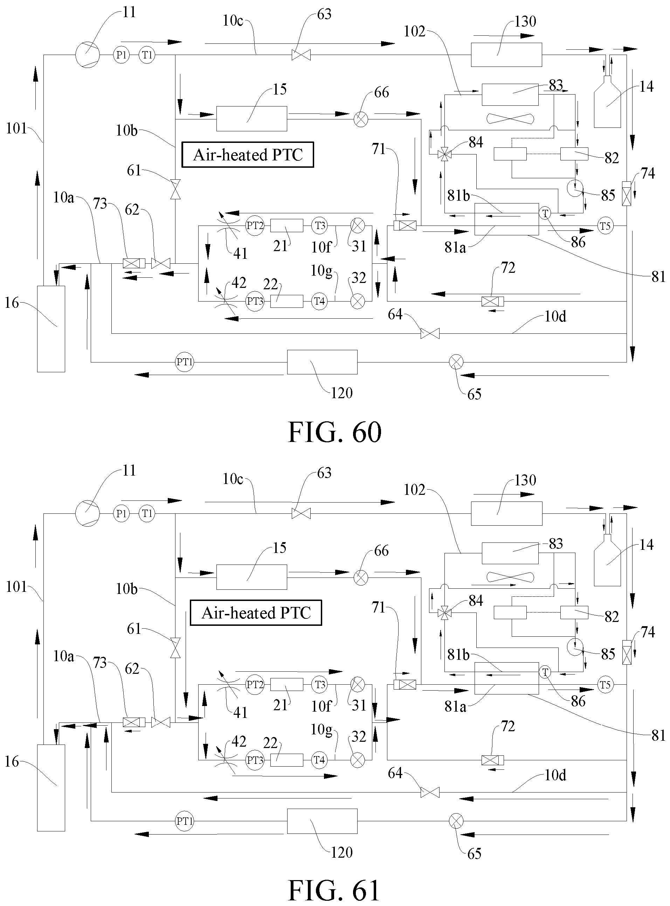

Embodiment 54 is under working conditions of heating and dehumidifying the passenger compartment and cooling the battery module. As shown in FIG. 60, in this case, the refrigerant is operated based on the working condition of Embodiment 14, while the coolant is operated based on the second working condition.

Embodiment 55 is under working conditions of heating and dehumidifying the passenger compartment and heating the battery module. As shown in FIG. 61, in this case, the refrigerant is operated based on the working condition of Embodiment 15, while the coolant is operated based on the first working condition.

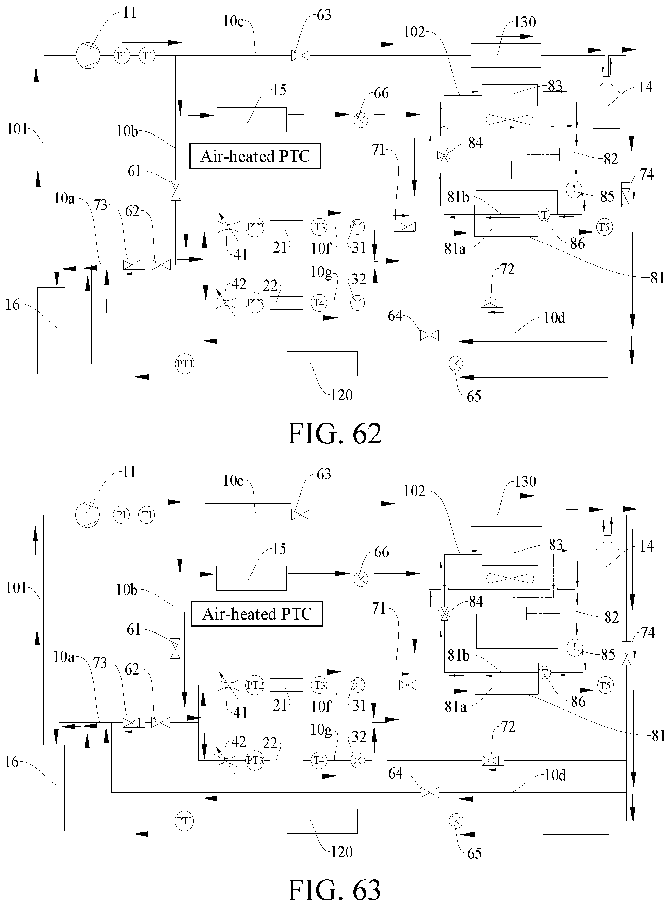

Embodiment 56 is under working conditions of heating and dehumidifying the passenger compartment and heating the battery module. As shown in FIG. 62, in this case, the refrigerant is operated based on the working condition of Embodiment 15, while the coolant is operated based on the mixed working condition.

Embodiment 57 is under working conditions of heating and dehumidifying the passenger compartment and heating the battery module. As shown in FIG. 63, in this case, the refrigerant is operated based on the working condition of Embodiment 15, while the coolant is operated based on the second working condition.

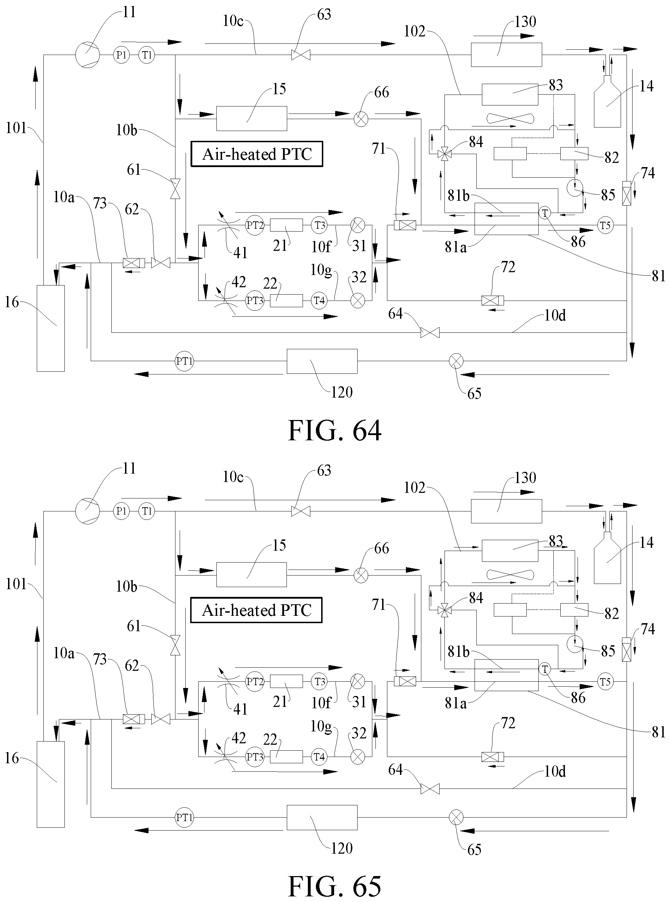

Embodiment 58 is under working conditions of heating and dehumidifying the passenger compartment and heating the battery module. As shown in FIG. 64, in this case, the refrigerant is operated based on the working condition of Embodiment 16, while the coolant is operated based on the first working condition.

Embodiment 59 is under working conditions of heating and dehumidifying the passenger compartment and heating the battery module. As shown in FIG. 65, in this case, the refrigerant is operated based on the working condition of Embodiment 16, while the coolant is operated based on the mixed working condition.

Embodiment 60 is under working conditions of heating and dehumidifying the passenger compartment and heating the battery module. As shown in FIG. 66, in this case, the refrigerant is operated based on the working condition of Embodiment 16, while the coolant is operated based on the second working condition.

A thermal management system 100 according to an embodiment of the present disclosure includes: a compressor 11, a second heat exchanger 13 and a heat exchange assembly 2. A first port of the second heat exchanger 13 is connected to an exhaust port of the compressor 11, and a second port of the second heat exchanger 13 is connected to the heat exchange assembly 2. The heat exchange assembly 2 is in communication with an air inlet of the compressor 11. The heat exchange assembly 2 includes a first heat exchange plate 21 and a second heat exchange plate 22 that are arranged in parallel, and the first heat exchange plate 21 and the second heat exchange plate 22 each are configured to adjust a temperature of a battery module of a vehicle.

When the thermal management system 100 is in operation, a refrigerant flows in from the air inlet of the compressor 11, and the low-temperature and low-pressure gaseous refrigerant is compressed by the compressor 11 to become a high-temperature and high-pressure gaseous refrigerant, which flows out from the exhaust port of the compressor 11. The first port of the second heat exchanger 13 is connected to the exhaust port of the compressor 11, and the second port of the second heat exchanger 13 is connected to the heat exchange assembly 2. Therefore, the refrigerant flows out of the compressor 11, then flows through the second heat exchanger 13, then flows through the heat exchange assembly 2, and finally returns to the compressor 11, thereby forming a refrigerant loop and completing one cycle.

In a refrigerant loop formed by the compressor 11, the heat exchange assembly 2 and the second heat exchanger 13 together, a high-temperature and high-pressure gaseous refrigerant flowing out of the exhaust port of the compressor 11 exchanges heat at the second heat exchanger 13, so that the refrigerant releases heat and is liquefied, and then the refrigerant passes through the heat exchange assembly 2 after being throttled and depressurized, absorbs heat and is vaporized at the heat exchange assembly 2 to finally become a low-temperature and low-pressure gaseous refrigerant, which flows in from the air inlet of the compressor 11. The refrigerant absorbs heat at the heat exchange assembly 2, and exchanges heat with the battery module, so as to refrigerate the battery module, to allow the battery module to have an appropriate operating temperature, thereby ensuring that the battery module operates stably and reliably. For example, when there is a too high ambient temperature in summer or there is a high operating temperature of the battery module, the battery module may be cooled to improve operating safety of the battery module and prolong operating stability of the battery module.

In the thermal management system 100 according to the embodiment of the present disclosure, the first heat exchange plate and the second heat exchange plate 22 are arranged to exchange heat with the battery module, and may be in direct contact with different end surfaces of the battery module for heat exchange, which can not only reduce the arrangement difficulty, but also improve heat exchange efficiency, allow the battery module to quickly reach an appropriate operating temperature, and improve operating stability of the battery module and operating efficiency of the thermal management system 100.

A vehicle according to an embodiment of the present disclosure includes: a battery module and a thermal management system 100. The thermal management system 100 is the thermal management system 100 according to any one of the above implementations, and a first heat exchange plate 21 and a second heat exchange plate 22 are configured to adjust a temperature of a battery module.

In the vehicle according to the embodiment of the present disclosure, through the arrangement of the above thermal management system 100, a number of times of maintaining and replacing the battery module can be reduced, charging efficiency and use convenience of the vehicle can be improved, and an appropriate layout of the vehicle can be facilitated.

In some embodiments, the first heat exchange plate 21 and the second heat exchange plate 22 are arranged on the battery module and exchange heat with the battery module.

In some embodiments of the present disclosure, the first heat exchange plate 21 and the second heat exchange plate 22 are arranged on opposite side walls of the battery module, so as to reduce a temperature difference of the battery module and prolong the cycling service life of the battery module.

For example, the battery module may include at least one row of battery packs, and each battery pack includes at least one battery cell. When the battery pack includes multiple battery cells, the multiple battery cells may be sequentially arranged in a length direction of the first heat exchange plate 213. Optionally, the battery cell has multiple side walls, the multiple side walls include opposite heat exchange side walls, an area of the heat exchange side walls is greater than that of the remaining side walls, and the first heat exchange plate 21 and the second heat exchange plate 22 each are in heat conduction fit with the heat exchange side walls, but the present disclosure is not limited thereto.

In the description of this specification, the description with reference to the terms such as "an embodiment", "some embodiments", "an illustrative embodiment", "an example", "a specific example", or "some examples" means that specific features, structures, materials or characteristics described with reference to the embodiment or example are included in at least one embodiment or example of the present disclosure. In this specification, the illustrative expressions of the above terms do not necessarily refer to the same embodiment or example. Moreover, the specific features, structures, materials or characteristics described may be combined in any suitable manner in any one or more embodiments or examples.

Although the embodiments of the present disclosure have been shown and described, it can be understood by a person of ordinary skill in the art that many changes, modifications, replacements and variations may be made to these embodiments without departing from the principles and purposes of the present disclosure, and the scope of the present disclosure is defined by the claims and equivalents thereof.

## Claims

1. A thermal management system, comprising: a compressor, a first heat exchanger and a heat exchange assembly, an exhaust port of the compressor being connected to the heat exchange assembly, a first port of the first heat exchanger being connected to an air inlet of the compressor, and a second port of the first heat exchanger being connected to the heat exchange assembly; and
the heat exchange assembly comprising a first heat exchange plate and a second heat exchange plate that are arranged in parallel, and the first heat exchange plate and the second heat exchange plate each being configured to adjust a temperature of a battery module.

2. The thermal management system according to claim 1, further comprising a second heat exchanger, a first port of the second heat exchanger being connected to the exhaust port of the compressor, and a second port of the second heat exchanger being connected to the heat exchange assembly; and the heat exchange assembly being connected to the air inlet of the compressor.

3. The thermal management system according to claim 1 or 2, wherein the air inlet of the compressor is connected to the first port of the first heat exchanger; and
the exhaust port of the compressor is in selective communication with the second port of the first heat exchanger or the heat exchange assembly, and the air inlet of the compressor is in selective communication with the heat exchange assembly or the first port of the first heat exchanger.

4. The thermal management system according to any one of claims 1 to 3, further comprising a storage, the storage being connected between the exhaust port of the compressor and the air inlet of the compressor.

5. The thermal management system according to claim 4, further comprising a fourth heat exchanger, the fourth heat exchanger being connected between the storage and the exhaust port of the compressor.

6. The thermal management system according to claim 5, wherein a first port of the fourth heat exchanger is connected to the exhaust port of the compressor, and a second port of the fourth heat exchanger is connected to the heat exchange assembly.

7. The thermal management system according to claim 4, further comprising a first throttling member, the first throttling member being arranged between the storage and the air inlet of the compressor.

8. The thermal management system according to any one of claims 1 to 7, wherein the first heat exchange plate and the second heat exchange plate are configured to be arranged on two opposite sides of the battery module.

9. The thermal management system according to any one of claims 1 to 8, wherein the heat exchange assembly further comprises a second valve group, the second valve group is arranged at a first port of the heat exchange assembly, and the first port of the heat exchange assembly is connected to the exhaust port of the compressor.

10. The thermal management system according to claim 9, wherein the second valve group comprises a first throttling element and a second throttling element that are connected in parallel, and the first throttling element and the second throttling element are connected to the first heat exchange plate and the second heat exchange plate respectively.

11. The thermal management system according to claim 2, wherein the heat exchange assembly further comprises a first valve group, the first valve group is arranged at a second port of the heat exchange assembly, and the second port of the heat exchange assembly is in communication with the second end of the second heat exchanger.

12. The thermal management system according to claim 11, wherein the first valve group comprises a first control valve and a second control valve that are connected in parallel, and the first control valve and the second control valve are connected to the first heat exchange plate and the second heat exchange plate respectively.

13. The thermal management system according to any one of claims 2 to 12, further comprising an in-vehicle condenser, the exhaust port of the compressor being connected to a first end of the in-vehicle condenser, and a second end of the in-vehicle condenser being connected to the second port of the first heat exchanger; and
the exhaust port of the compressor being in selective communication with at least one of the first end of the in-vehicle condenser and the heat exchange assembly.

14. The thermal management system according to claim 13, further comprising a high-pressure thermal management subsystem, the high-pressure thermal management subsystem comprising a third heat exchanger and a circulation loop, the third heat exchanger having a first flow channel and a second flow channel, a first port of the first flow channel being connected to the heat exchange assembly and the second end of the in-vehicle condenser, and a second port of the first flow channel being connected to the second port of the first heat exchanger; and
the second flow channel being arranged on the circulation loop, and the circulation loop being configured to exchange heat with the high-pressure thermal management subsystem.

15. The thermal management system according to any one of claims 2 to 14, further comprising a first switch valve, the first switch valve being arranged between the heat exchange assembly and the second port of the first heat exchanger.

16. The thermal management system according to any one of claims 2 to 15, further comprising a second switch valve, the second switch valve being arranged between the heat exchange assembly and the second port of the second heat exchanger.

17. The thermal management system according to any one of claims 1 to 16, further comprising a third switch valve, the third switch valve being arranged between the heat exchange assembly and the air inlet of the compressor.

18. A thermal management system, comprising: a compressor, a second heat exchanger and a heat exchange assembly, a first port of the second heat exchanger being connected to an exhaust port of the compressor, and a second port of the second heat exchanger being connected to the heat exchange assembly; the heat exchange assembly being in communication with an air inlet of the compressor; and
the heat exchange assembly comprising a first heat exchange plate and a second heat exchange plate that are arranged in parallel, and the first heat exchange plate and the second heat exchange plate each being configured to adjust a temperature of a battery module of a vehicle.

19. A vehicle, comprising:
a battery module; and
a thermal management system, the thermal management system being the thermal management system according to any one of claims 1 to 18, and a first heat exchange plate and a second heat exchange plate being configured to adjust a temperature of a battery module.

20. The vehicle according to claim 19, wherein the first heat exchange plate and the second heat exchange plate are arranged on the battery module and exchange heat with the battery module.
